# EUROPÄISCHE PATENTSCHRIFT

(11) **EP 4 011 841 B1**
(45) Veröffentlichungstag und Bekanntmachung des Hinweises auf die Patenterteilung: **02.07.2025**
(21) Anmeldenummer: 20212771.8
(22) Anmeldetag: 09.12.2020
(51) Int. Cl.: C03B 37/012

(54) **VERFAHREN ZUR HERSTELLUNG EINER VORFORM EINER ANTIRESONANTEN HOHLKERNFASER**
METHOD OF MAKING A PREFORM FOR AN ANTI RESONANT HOLLOW CORE FIBER
PROCÉDÉ DE FABRICATION D'UNE PRÉFORME POUR FIBRE À COEUR CREUX ANTI-RÉSONANTE

(43) Veröffentlichungstag der Anmeldung: 15.06.2022
(73) Patentinhaber: Heraeus Quarzglas GmbH & Co. KG, 63450 Hanau (DE)
(72) Erfinder: ROSENBERGER, Manuel, 63450 Hanau (DE); PLASS, Jaqueline, 63450 Hanau (DE); TANSEL, Yusuf, 63450 Hanau (DE); REIS, Benjamin, 63450 Hanau (DE); EHRENTRAUT, Enrico, 63450 Hanau (DE)
(74) Vertreter: Heraeus IP

(56) Entgegenhaltungen:
- JP-A- 2018 150 184
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972

## Beschreibung

### Hintergrund der Erfindung

Die Erfindung betrifft Verfahren zur Herstellung einer Vorform einer Antiresonanten-Hohlkernfaser.

### Stand der Technik

Hohlkernfasern weisen einen Kern auf, der einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist. In Abhängigkeit vom physikalischen Mechanismus der Lichtleitung werden Hohlkernfasern unterteilt in "photonische Bandlückenfasern" und "Antiresonanz-Reflexionsfasern".

Bei "photonischen Bandlückenfasern" ist der hohle Kernbereich von einem Mantel umgeben, in dem kleine Hohlkanäle periodisch angeordnet sind. Die periodische Struktur im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante-Hohlkernfaser" ("antiresonant hollow-core fiber"; ARHCF) bezeichneten Ausführungsform der Hohlkernfaser ist der hohle Kernbereich von einem inneren Mantelbereich umgeben, in dem sogenannte Antiresonanzelemente (auch "antiresonante Elemente" oder auch "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Aus der EP 3 136 143 A1 ist eine Antiresonante-Hohlkernfaser bekannt (dort bezeichnet als "Hohlkernfaser ohne Bandlücke"), bei der der Kern neben der Fundamentalmode noch weitere Moden leiten kann. Zu diesem Zweck ist der Kern von einem inneren Mantel mit "nicht-resonanten Elementen" umgeben, die eine Phasenanpassung von antiresonanten Moden mit den höheren Moden liefern.

Aus der JP 2018 150184 A ist ein Verfahren zur Herstellung einer Vorform für Antiresonante-Hohlkernfasern bekannt, bei dem der Einsatz von angeschweißten Lochscheiben an den Hüllrohrenden zur Positionierung der nicht-resonanten Elementen aufgezeigt wird. Als nachteilig hat sich dabei herausgestellt, dass mit dieser Art Lochscheiben nicht die benötigte Positionierungsgenauigkeit der nicht-resonanten Elementen (ARE) erreicht wird.

Die Veröffentlichung A.F: Kosolapov et.al. "Hollow-core revolver fibre with a doublecapillary reflective cladding" (in Quantum Electronic, Bd. 46, Nr. 3, 29. März 2016 (2016-03-29), Seiten 267-270) beschreibt eine Positionierungsschablone für ARE.

Weitere Verfahren zum Verbinden der ARE und des Hüllrohrs sind in folgenden Dokumenten beschrieben: CN 105807363 B, WO 2015 185761 A1, WO 2017 108061 A1, WO 2018 169487 A1.

### Technische Aufgabenstellung

Antiresonante-Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanz- beziehungsweise Antiresonanzbedingungen nur Maßabweichungen unterhalb der Größenordnung der Arbeitswellenlänge des zu führenden Lichts tolerierbar sind. Abweichungen von der Soll-Geometrie können ihre Ursache bei der Konfiguration der Faser-Vorform haben, und sie können auch durch ungewollte nicht-maßstäbliche Verformungen beim Faserziehprozess auftreten.

Ziel der Erfindung ist es, ein Verfahren zur kostengünstigen Herstellung einer Vorform für eine Antiresonante-Hohlkernfaser anzugeben, dass Beschränkungen herkömmlicher Herstellungsverfahren vermeidet.

Insbesondere ist es Ziel der Erfindung, ein Verfahren zur Herstellung einer Vorform für Antiresonante-Hohlkernfasern bereitzustellen, mit dem reproduzierbar eine exakte Positionierung der Antiresonanzelemente in einer ausreichend stabilen Weise erreicht werden kann.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen parallele Achsen" einen Winkel von -5 Grad bis 5 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥95 bis ≤100 Gewichts-%. Weiterhin schließen "im Wesentlichen rechtwinklig" einen Winkel von 85 Grad bis 95 Grad ein.

### Ausführliche Beschreibung

Die Erfindung betrifft ein Verfahren zur Herstellung einer Vorform einer antiresonanten Hohlkernfaser, mit den Schritten:
a) Bereitstellen eines Hüllrohrs, das eine Hüllrohr-Innenbohrung und eine Hüllrohr-Längsachse aufweist, entlang der sich eine von einer Innenseite und einer Außenseite begrenzte Hüllrohr-Wandung erstreckt,
b) Vorbereiten einer Anzahl von Antiresonanzelement-Vorformlingen, jeweils umfassend ein ARE-Außenrohr und ein darin eingesetztes ARE-Innenrohr,
c) Präparieren einer Positionierungsschablone, aufweisend eine Anzahl die Positionierungsschablone durchdringenden Durchgangsöffnungen, angepasst zu einer Längsführung jeweils eines Antiresonanzelement-Vorformlings, wobei die Positionierungsschablone und das Hüllrohr materialeinheitlich sind, so dass die Positionierungsschablone und das Hüllrohr im Wesentlichen denselben chemischen Stoff aufweisen und die Gesamtmasse der unterschiedlichen chemischen Elemente in der Positionierungsschablone und dem Hüllrohr weniger als 1 Gew.-% betragen,
d) Anbringen der Positionierungsschablone an einem ersten Ende des Hüllrohrs,
e) Einführen von wenigstens Teilen der Antiresonanzelement-Vorformlinge durch die Durchgangsöffnungen zum Anordnen der Antiresonanzelement-Vorformlinge in der Hüllrohr-Innenbohrung,
f) Bearbeiten einer Anordnung, umfassend das Hüllrohr, die Antiresonanzelement-Vorformlinge und die Positionierungsschablone, durch einen Heißformprozess ausgewählt aus wenigstens einem von Elongieren und Kollabieren.

Zur Überwindung der oben genannten Nachteile im Stand der Technik ist erfindungsgemäß vorgesehen, dass die Positionierungsschablone mindestens eine Zentrierfläche aufweist, die mit dem ersten Ende des Hüllrohrs derart selbstzentrierend zusammenwirkt, dass die Antiresonanzelement-Vorformlinge im Schritt e) "Einführen" an Soll-Positionen angeordnet werden.

Das Verfahren zur Herstellung der Vorform ermöglicht durch die Nutzung der Positionierungsschablone eine reproduzierbare und präzise Anordnung der Antiresonanzelement-Vorformlinge in der Hüllrohr-Innenbohrung. Die Vorform ist dabei dasjenige Bauteil, aus dem die Antiresonante-Hohlkernfaser gezogen werden kann. Alternative kann die Vorform zu einer sekundären Vorform weiterverarbeitet werden, aus der die Hohlkernfaser gezogen wird. Dabei umfasst das Verfahren die folgenden Schritte:

### Schritt a)

Im Rahmen des Schrittes a) "Bereitstellen" wird das Hüllrohr vorbereitet. Dieses Hüllrohr weist einen hohlen Kern auf, der sich entlang der Hüllrohr Längsachse erstreckt. In einer Ausführungsform weist das Hüllrohr einen Außendurchmesser im Bereich von 65 bis 300 mm, vorzugsweise 90 bis 250 mm, vorzugsweise 120 bis 200 auf. Insbesondere kann das Hüllrohr eine Länge von mindestens 1 m aufweisen. In einer Ausführungsform umfasst oder besteht das Hüllrohr aus einem Material, welches für ein Arbeitslicht der optischen Faser transparent ist, beispielsweise Glas, insbesondere dotiertes oder nicht dotiertes Quarzglas (SiO2). Eine Dotierung ermöglich die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz.

### Schritt b)

Im Rahmen des Schrittes b) "Vorbereiten" werden eine Anzahl an Antiresonanzelement-Vorformlingen erstellt. Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Der einzelne Antiresonanzelement-Vorformling ist aus rohrartigen Strukturelementen aufgebaut, von denen ein Teil eine Wandstärke im Bereich von 0,1 mm bis 2 mm, vorzugsweise 0,2 mm bis 1,5 mm aufweisen kann. Die Antiresonanzelement-Vorformlinge können einfache oder verschachtelte Bauteile sein, wobei der jeweilige Antiresonanzelement-Vorformling ein ARE-Außenrohr und ein darin eingesetztes ARE-Innenrohr umfasst. Die Antiresonanzelement-Vorformlinge haben mindestens zwei Wandungen, die aus Richtung des Hohlkerns gesehen eine negative Krümmung haben (konvex) oder keine Krümmung haben (plan, gerade). Durch Weiterverarbeitung der Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen.

In einer Ausführungsform umfasst oder besteht der Antiresonanzelement-Vorformling aus einem Material, welches für ein Arbeitslicht der optischen Faser transparent ist, beispielsweise Glas, insbesondere dotiertes oder nicht dotiertes Quarzglas (SiO2). Eine Dotierung ermöglich die Anpassung von physikalischen Eigenschaften, wie beispielsweise des thermischen Ausdehnungskoeffizienten. Als die Viskosität von Quarzglas absenkende Dotierstoffe kommen vorzugsweise Fluor, Chlor und/oder Hydroxylgruppen zum Einsatz.

In einer Ausführungsform sind die Antiresonanzelement-Vorformlinge und das Hüllrohr materialeinheitlich. In einer weiteren Ausführungsform bestehen die Antiresonanzelement-Vorformlinge und das Hüllrohr aus demselben Material, insbesondere aus nicht dotiertem oder dotiertem Quarzglas (SiO2), wobei die Menge der Dotierung 0,1 Gew.-% nicht überschreitet.

Der Begriff materialeinheitlich beschreibt die stoffliche Eigenschaft zweier Teile. Die zwei Teile weisen dabei im Wesentlichen denselben chemischen Stoff auf. Die Gesamtmasse der unterschiedlichen chemischen Elemente in beiden Teilen kann dabei weniger als 1 Gew.-%, insbesondere weniger als 0,5 Gew-%, insbesondere weniger als 0,1 Gew.-% betragen. Insbesondere unterscheidet sich die chemische Zusammensetzung der beiden Teile um einen Gehalt an Verunreinigungen von weniger als 500 Gew.-ppm, insbesondere weniger als 100 Gew.-ppm und/oder um einen Gehalt an Dotanden von weniger als 10000 Gew.-ppm, insbesondere weniger als 5000 Gew.-ppm.

### Schritt c)

Im Rahmen des Schrittes c) "Präparieren" wird die Positionierungsschablone erstellt. Die Positionierungsschablone weist eine zylinderartige, deckelartige oder scheibenartige Gestalt auf. In einer Ausführungsform weist die Positionierungsschablone eine transversale Erstreckung von 5 bis 200 mm, insbesondere 15 bis 80 mm auf. In einer Ausführungsform bestehen die Positionierungsschablone und das Hüllrohr aus demselben Material, insbesondere aus nicht dotiertem oder dotiertem Quarzglas (SiO2), wobei die Menge der Dotierung 0,1 Gew.-% nicht überschreitet.

Die Positionierungsschablone weist eine Anzahl die Positionierungsschablone durchdringenden Durchgangsöffnungen auf. Jede Durchgangsöffnung ist derart eingerichtet, um durch einen Grundkörper der Positionierungsschablone hindurch mindestens eine fluidleitende Verbindung zwischen der Hüllrohr-Innenbohrung und einem Außenraum herzustellen. Weiterhin ist der Innendurchmesser der Durchgangsöffnung derart ausgelegt, dass ein Antiresonanzelement-Vorformlinge größtenteils longitudinal hindurchgeschoben werden kann. Diese Aussage beschränkt nicht die eine Nutzung einer Aufweitung des ARE-Außenrohres, welches der Positionierung der Antiresonanzelement-Vorformlinge dient und später genauer beschrieben wird.

Weiterhin sind die Durchgangsöffnungen angepasst zu einer Längsführung jeweils eines Antiresonanzelement-Vorformlings. Die Durchgangsöffnungen lagern die Antiresonanzelement-Vorformlinge im Schritt f) "Bearbeiten", so dass deren Ausgestaltung die Genauigkeit bei der Positionierung der Antiresonanzelement-Vorformlinge in der Hüllrohr-Innenbohrung beeinflussen kann. Um die angestrebte Genauigkeit bei der Positionierung der Antiresonanzelement-Vorformlinge an Soll-Positionen zu erreichen, können die Durchgangsöffnungen eine oder mehrere der folgenden Merkmale aufweisen:
- Der Unterschied zwischen dem Innendurchmesser der Durchgangsöffnung zum Außendurchmesser der Antiresonanzelement-Vorformlinge kann weniger als 5% des Außendurchmesser der Antiresonanzelement-Vorformlinge, insbesondere weniger als 3,5%, vorzugsweise weniger als 2% betragen.
- Mindestens 95%, vorzugsweise mindestens 97%, vorzugsweise mindestens 99,7% der Oberfläche der Durchgangsöffnung weisen eine Rauigkeit Ra von [0,01; 0,4] µm, vorzugsweise [0,02; 0,2] µm auf.
- Die Oberfläche der Durchgangsöffnung weniger als 1000 Mikrorisse/cm2, vorzugsweise weniger als 500 Mikrorisse/cm2 aufweist.

In einer Ausführungsform bestehen die Positionierungsschablone und das Hüllrohr aus demselben Material, insbesondere aus nicht dotiertem oder dotiertem Quarzglas (SiO2), wobei die Menge der Dotierung 0,1 Gew.-% nicht überschreitet.

Die Positionierungsschablone und das Hüllrohr sind materialeinheitlich. Der oben definierte Begriff materialeinheitlich beschreibt die stoffliche Eigenschaft der zwei Teile Positionierungsschablone und Hüllrohr.

### Schritt d)

Im Rahmen des Schrittes d) "Anbringen" wir die Positionierungsschablone mit dem ersten Ende des Hüllrohrs verbunden. Im erfindungsgemäßen Verfahren dient die Positionierungsschablone dazu, die Antiresonanzelemente-Vorformlinge in der Hüllrohr-Innenbohrung zu positionieren. Dazu bedarf es eines Verbunds zwischen Positionierungsschablone und dem Hüllrohr.

### Schritt e)

Im Rahmen des Schrittes d) "Einführen" erfolgt ein zumindest partielles Einschieben der Antiresonanzelement-Vorformlinge durch die Durchgangsöffnungen. Ziel ist dabei, dass die Antiresonanzelement-Vorformlinge in der Hüllrohr-Innenbohrung angeordnet werden.

### Schritt f)

Im Rahmen des Schrittes d) "Bearbeiten" wird die Anordnung, umfassend das Hüllrohr, die Antiresonanzelement-Vorformlinge und die Positionierungsschablone, durch wenigstens einem der Heißprozesse Elongieren und Kollabieren weiterverarbeitet.

Unter dem Begriff eines Elongierens wird im Rahmen der Erfindung eine Vergrößerung der longitudinalen Ausdehnung eines Körpers verstanden. Diese Vergrößerung der longitudinalen Ausdehnung kann einhergehen mit einer Reduktion der transversalen Ausdehnung des Körpers. Das Elongieren kann maßstäblich erfolgen, so dass sich beispielsweise die Form und Anordnung von Bauteilen oder Bestandteilen im elongierten Endprodukt widerspiegeln.

Unter dem Begriff eines Kollabierens wird im Rahmen der Erfindung eine Reduktion der transversalen Ausdehnung eines Körpers verstanden. Diese Reduktion der transversalen Ausdehnung des Körpers kann im Rahmen einer Erhöhung der Temperatur des Körpers erfolgen und kann insbesondere zu einer Vergrößerung der longitudinalen Ausdehnung des Körpers führen.

Unter dem Begriff Heißprozess wird ein Verfahrensschritt verstanden, bei dem die Temperatur eines Elements durch Wärmeeintrag erhöht wird. Beispiele für Heißprozesse sind:
- Flammenbasierte Heißprozesse basieren auf der Oxydation eines exotherm reagierenden Gases. Ein Beispiel ist die Nutzung von Wasserstoff - auch als "H2" bezeichnet - als Brenngas (die Flammenhydrolyse). Es reagiert mit dem Sauerstoff - auch als "O2" bezeichnet - in der Luft.
- Flammenfreie Heißprozesse nutzen andere sich erwärmende Systeme, die keiner offenen Flamme benötigen. Ein Beispiel ist die Nutzung eines Widerstands, der elektrische Energie in thermische Energie (Wärme) umwandelt.

Erfindungsgemäß ist vorgesehen, dass die Positionierungsschablone mindestens eine Zentrierfläche aufweist. Diese Zentrierfläche wirkt mit dem ersten Ende des Hüllrohrs derart selbstzentrierend zusammen, dass die Antiresonanzelement-Vorformlinge im Schritt e) "Einführen" an Soll-Positionen angeordnet werden.

Der Begriff selbstzentrierend beschreibt im Rahmen der Erfindung ein Zusammenwirken zweier Körper, die eine derart gestaltete äußere Form aufweisen, dass beide ohne äußere Einwirkung eine vordefinierte Position zueinander einnehmen.

Wesentlich für die Einhaltung der Resonanz- beziehungsweise Antiresonanzbedingungen in der späteren Hohlkernfaser, beziehungsweise für eine weitere Reduktion der Dämpfung in der späteren Hohlkernfaser ist die Erfüllung wenigstens einer der folgenden Bedingungen:
- Die Antiresonanzelement-Vorformlinge müssen an den vorberechneten Soll-Positionen in dem Hüllrohr angeordnet sein.
- Die Antiresonanzelement-Vorformlinge müssen an den vorberechneten Soll-Positionen in der Anordnung angeordnet sein.
- Die Antiresonanzelement-Vorformlinge müssen an den vorberechneten Soll-Positionen in der Vorform angeordnet sein.

Die Erfindung ermöglich eine Reduktion der Abweichung der tatsächlichen Position der Antiresonanzelement-Vorformlinge von der Soll-Position in dem Hüllrohr und/oder der Anordnung und/oder der Vorform.

Um diese Reduktion zu erzielen, weist die Positionierungsschablone mindestens die Zentrierfläche auf, die durch die Selbstzentrierung eine reproduzierbare Positionierung gegenüber dem Hüllrohr und - daraus abgeleitet - eine reproduzierbare Positionierung der Durchgangsöffnungen gegenüber der Hüllrohr-Innenbohrung erzielt. Letztere führt dann zu einer reproduzierbaren Positionierung der Antiresonanzelement-Vorformlinge an den Soll-Positionen in dem Hüllrohr und/oder der Anordnung und/oder der Vorform.

Nach Schritt d) "Anbringen" kann eine Längsachse der Durchgangsöffnung im Wesentlichen parallel zur Längsachse der Hüllrohr-Längsachse ausgerichtet sein. In einer Ausführungsform ist die Längsachse der Durchgangsöffnung und die Hüllrohr-Längsachse derart parallel gestaltet, dass nach Schritt d) "Anbringen" und Schritt e) "Einführen" die Längsachse der Antiresonanzelement-Vorformlinge und die Hüllrohr-Längsachse einen Winkel von -1,5 Grad bis 1,5 Grad, vorzugsweise von -0,85 Grad bis 0,85 Grad, vorzugsweise von -0,42 Grad bis 0,42 Grad zueinander aufweisen. Diese Parallelität stellt sicher, dass die Antiresonanzelement-Vorformlinge an den Soll-Positionen in dem Hüllrohr und/oder der Anordnung und/oder der Vorform angeordnet sind und sichert so die Einhaltung der Resonanz- beziehungsweise Antiresonanzbedingungen in der späteren Hohlkernfaser.

Die Positionierungsschablone kann insbesondere ein erstes Positionierelement, wie eine Ausschneidung aufweisen, welche mit einem ersten Gegenpositionierelement an dem ersten Ende des Hüllrohres zusammenwirkt, und so eine Rotation der Positionierungsschablone um seine Längsachse zu verhindern.

Im Rahmen in einer Ausführungsform kann die Positionierungsschablone wenigstens eine zylinderartig ausgestaltet Durchgangsöffnung aufweisen. Dabei weist der Innendurchmesser, der wenigstens einen Durchgangsöffnung einen Durchmesser auf, der um 0,15% bis 7 %, insbesondere 0,35 % bis 6 %, insbesondere 0,55 % bis 3,5 % größer ist als der Außendurchmesser der Antiresonanzelement-Vorformlinge. Bei dieser Art der Ausgestaltung können die Antiresonanzelement-Vorformlinge direkt durch die Durchgangsöffnung geschoben werden und können insbesondere auf der gesamten Länge der Positionierungsschablone form- und/oder kraftschlüssig an der Innenwandung der Durchgangsöffnungen zum Liegen kommen.

Eine Ausführungsform zeichnet sich dadurch aus, dass das Hüllrohr im Bereich des ersten Endes zumindest partiell ausgeschnitten ist, um eine Gegenzentrierfläche zu bilden, die mit der Zentrierfläche formschlüssig zusammenwirkt. Diese Art des Zusammenwirkens erleichtert das selbstzentrierende Zusammenwirken der Zentrierfläche und dem ersten Ende des Hüllrohrs, und kann insbesondere im Rahmen des Schrittes e) "Einführen" auftreten. Dabei kann die Betriebsbelastung normal, das heißt rechtwinklig zu den Flächen der beiden Verbindungspartner wirken.

Eine Ausführungsform zeichnet sich dadurch aus, dass die Gegenzentrierfläche und die Zentrierfläche kraftschlüssig zusammenwirken. Diese Art des Zusammenwirkens kann im Rahmen des Schrittes f) "Bearbeiten" auftreten.

In einer Ausführungsform ist eine Kante der Hüllrohr-Innenbuchung am ersten Ende mit einer Fase versehen. Die dadurch entstehende Fläche wirkt als Gegenzentrierfläche.

Eine Ausführungsform zeichnet sich dadurch aus, dass die Positionierungsschablone zumindest partiell kegelstumpfartig ausgeformt ist, wobei die Zentrierfläche zumindest partiell mantelflächenartig ausgebildet ist.

Ein Kegelstumpf bezeichnet einen speziellen Rotationskörper, der dadurch entsteht, dass von einem geraden Kreiskegel parallel zur Grundfläche ein kleinerer Kegel abgeschnitten wird. Dieser kleinere Kegel wird als Ergänzungskegel des eigentlichen Kegelstumpfs bezeichnet. Die größere der beiden parallelen Kreisflächen ist die Grundfläche, die kleinere die Deckfläche. Die dritte der begrenzenden Flächen wird als Mantelfläche bezeichnet. Unter der Höhe des Kegelstumpfs versteht man den Abstand von Grund- und Deckfläche.

Die kegelstumpfartige (oder auch konische) Ausbildung entsteht durch ein Abwinkeln der Seitenfläche gegenüber der Längsachse der Positionierungsschablone. Durch diese Art der Abwicklung vergrößert sich die geometrische Fläche der mantelflächenartigen Zentrierfläche gegenüber einer Umfangsfläche der Positionierungsschablone. Insofern kann die Positionierungsschablone durch die größere Fläche eine höhere Positionierungsgenauigkeit erreichen.

Eine Ausführungsform zeichnet sich dadurch aus, dass das Hüllrohr im Bereich des ersten Endes zumindest partiell kegelstumpfartig ausgeschnitten ist. Diese Art der Ausgestaltung ermöglicht ein einfaches selbstzentrierendes Zusammenwirken der Zentrierfläche mit der Gegenzentrierfläche. Die mantelflächenartigen Zentrierfläche kommt im Rahmen des Schrittes d) "Anbringen" kraft- und/oder formschlüssig in dem kegelstumpfartig ausgeschnittenen Bereich des ersten Endes des Hüllrohres zum Liegen. Durch eine aufeinander abgestimmt Ausgestaltung der Zentrierfläche und der Gegenzentrierfläche kann die Positionierschablone in das erste Ende des Rohres eingebracht werden. Beim Einführen der Antiresonanzelement-Vorvorformlinge durch die Durchgangsöffnung im Rahmen des Schrittes e) "Einführen", verbleibt die Positionierschablone in ihrer Position und stellt sicher, dass die Antiresonanzelement-Vorformlinge an Soll-Positionen angeordnet werden.

Eine Ausführungsform zeichnet sich dadurch aus, dass das Anbringen im Rahmen des Schrittes d) "Anbringen" mittels eines flammenbasierten Prozesses erfolgt. Bei dem flammenbasierten Prozess (wie der Flammenhydrolyse) wird vorzugsweise Wasserstoff - auch als "H2" bezeichnet - als Brenngas verwendet. Es reagiert mit dem Sauerstoff - auch als "O2" bezeichnet - in der Luft. Diese exotherme Reaktion erzeugt die in Schritt d) benötigte Energie. Dabei erfolgt ein Wärmeeintrag, insbesondere durch einen Brenner, auf das Hüllrohr. In einer Ausführungsform erfolgt der Wärmeeintrag an einer Stirnfläche des Hüllrohrs in der Nähe der Positionierschablone. Dieser Wärmeeintrag kann insbesondere mittels fokussierter Flamme erfolgen. Dabei durchströmt die Wärme die Stirnfläche des Hüllrohrs und tritt dort in die Rohrwandlung ein. Der Austritt der Wärme erfolgt - unter anderem - an der Hüllrohr-Innenbohrung. Dort wirkt die Wärme dann auf die Positionierschablone, was zu einem stoffschlüssigen Verbund führen kann.

Unter dem Begriff eines stoffschlüssigen Verbundes wird im Rahmen der Erfindung ein miteinander verbinden zweier Teile durch Verschmelzen sowie durch intermolekulare oder chemische Bindungskräfte, gegebenenfalls über Zusatzstoffe, verstanden. Zu diesen Verbindungen gehören insbesondere Schweiß- und Lötverbindungen. Diese sind gleichzeitig nicht lösbare Verbindungen, die sich nur durch Zerstörung der Verbindungsmittel trennen lassen.

Eine Ausführungsform zeichnet sich dadurch aus, dass die Antiresonanzelement-Vorformlinge im Schritt f) "Bearbeiten" flammenfrei an der Hüllrohr-Wandung thermisch fixiert werden. Die Position der Antiresonanzelement-Vorformlinge im Hüllrohre, die durch die Ausgestaltung der Durchgangsöffnungen in der Positionierschablone vorgegeben ist, kann wie folgt sein:
- Die Antiresonanzelement-Vorformlinge können die Innenseite der Hüllrohr-Innenbohrung nach dem Schritt e) "Einführen" berühren, oder
- Zwischen den Antiresonanzelement-Vorformlingen und der Innenseite der Hüllrohr-Innenbohrung kann nach dem Schritt e) "Einführen" noch ein Spalt bestehen, der insbesondere beim Schritt f) "Bearbeiten" geschlossen wird.

Bei bekannten Verfahren werden die Antiresonanzelement-Vorformlinge mittels eines Brenners unter Nutzung einer Flamme an der Hüllrohr-Wandung thermisch fixiert. Erst danach erfolgt ein Elongieren oder/und Kollabieren. Als nachteilig hat sich dabei die Bildung von Soot (Bezeichnung für SiO2-Partikeln) und Abbrand herausgestellt. Diese Nebenprodukte der Verbrennung können verschiedene Ausgangspunkte haben: Die Verbrennung des Brenngases im Brenner kann unter Bildung einer Flamme mit einem Brennstoffüberschuss oder mit einem Oxidatorüberschuss erfolgen. Bekannte Nebenprodukte einer solcherart Verbrennung sind etwa Ruße. Weiterhin kann der Wärmeeintrag aus dem Brenner auf das Hüllrohr zu einem lokalen Verdampfen des Quarzglases führen. Der so entstehende Soot kann sich anschließend auf den Einzelteilen der Vorform, insbesondere auf den Antiresonanzelement-Vorformlingen niederschlagen. Dieses führt dann zu einer Reduktion der Qualität der final hergestellten Vorform, was sich insbesondere in einer höheren Dämpfung oder in Faserbrüchen zeigt.

Der Niederschlag von Abbrand oder Soot, bildet sich insbesondere an der Stirnfläche des Hüllrohres sowie an dessen Innenoberfläche. Weiterhin sind die Oberflächen der Antiresonanzelement-Vorformlinge besonders betroffen. Aufgrund der Komplexität der erstellten Geometrie ist eine vollständige Säuberung, zum Beispiel durch Flusssäure, kaum möglich. Durch die Nutzung der erfindungsgemäßen Positionierungsschablone ist es nunmehr möglich, die Antiresonanzelement-Vorformlingen an ihren Soll-Positionen zu positionieren und dann mittels des flammenfreien Prozesses im Rahmen des Schrittes f) "Bearbeiten" stoffschlüssig mit der Hüllrohr-Wandung zu verbinden, ohne dass Soot oder Abbrand sich in der Anordnung niederschlägt.

Nur durch den Einsatz der erfindungsgemäßen Positionierungsschablone, die durch den selbstzentrierenden Aufbau eine präzise Positionierung der Antiresonanzelement-Vorformlingen an Soll-Positionen ermöglicht, kann auf ein flammenbasiertes Anheften oder vollständiges Verbinden der Antiresonanzelement-Vorformlingen mit dem Hüllrohr vor dem Schritt f) "Bearbeiten" verzichtet werden. In bisher bekannten Herstellerverfahren für Vorformen einer antiresonanten Hohlkernfaser wird ein flammenbasierter Heißformprozess genutzt, um die Antiresonanzelement-Vorformlingen mit dem Hüllrohr zu verschweißen, sodass diese beim Elongierten und/oder Kollabieren die Position behalten. Der Nachteil, dass die so erstellten Vorformen mit Soot oder Abbrand kontaminiert sind, wird erfindungsgemäß überwunden.

Ein Ausführungsform des Verfahrens zeichnet sich dadurch aus, dass das Hüllrohr ein zweites Ende aufweist. Das erste Ende und das zweite Ende liegen entgegengesetzt an den jeweils äußersten Endpunkten des Hüllrohrs.

Ein Ausführungsform des Verfahrens zeichnet sich dadurch aus, dass das Verfahren die Schritte umfasst:
(i) Erstellen einer zweiten Positionierungsschablone, aufweisend eine Anzahl die zweite Positionierungsschablone durchdringende zweiten Durchgangsöffnungen, angepasst zu einer Längsführung jeweils eines Antiresonanzelement-Vorformlings, wobei die zweite Positionierungsschablone und das Hüllrohr materialeinheitlich sind, so dass die zweite Positionierungsschablone und das Hüllrohr im Wesentlichen denselben chemischen Stoff aufweisen und die Gesamtmasse der unterschiedlichen chemischen Elemente in der zweiten Positionierungsschablone und dem Hüllrohr weniger als 1 Gew.-% betragen,
(ii) Kombinieren der zweiten Positionierungsschablone mit dem zweiten Ende des Hüllrohrs.

Sämtliche für die Positionierungsschablone beschriebenen Eigenschaften gelten auch für die zweite Positionierungsschablone und umgekehrt.

Die zweite Positionierungsschablone kann insbesondere ein zweites Positionierelement, wie eine Ausschneidung aufweisen, welche mit einem zweiten Gegenpositionierelement an dem zweiten Ende des Hüllrohres zusammenwirkt, und so eine Rotation der zweiten Positionierungsschablone um seine Längsachse zu verhindern.

Ein Ausführungsform des Verfahrens zeichnet sich dadurch aus, dass das Verfahren die Schritte umfasst:
(iii) Einschieben von wenigstens Teilen der Antiresonanzelement-Vorformlinge durch die Durchgangsöffnungen der zweiten Positionierungsschablone,
(iv) wobei die zweite Positionierungsschablone mindestens eine zweite Zentrierfläche aufweist, die mit dem zweiten Ende des Hüllrohrs derart selbstzentrierend zusammenwirkt, dass die Antiresonanzelement-Vorformlinge in dem Schritt (iii) "Einschieben" an Soll-Positionen angeordnet werden.

Im Rahmen dieser Ausführungsform werden die Antiresonanzelement-Vorformlinge nicht nur mittels der Positionierungsschablone an der Soll-Position gehalten, sondern durch eine Kombination der Positionierungsschablone und der zweiten Positionierungsschablone. Beide Positionierungsschablonen weisen Durchgangsöffnungen auf, durch die wenigstens ein Teil der Antiresonanzelement-Vorformlinge durchführbar ist. Somit kann der Antiresonanzelement-Vorformling an seinen beiden entgegengesetzten Enden durch die Positionierungsschablone und die zweite Positionierungsschablone in dem Hüllrohr gehalten werden. Diese Art der Ausführung Variante erhöht weiter die erfindungsgemäße Präzision bei der Positionierung der Antiresonanzelement-Vorformlinge an den Soll-Positionen.

Im Rahmen in einer Ausführungsform kann die zweite Positionierungsschablone wenigstens eine zylinderartig ausgestaltete zweite Durchgangsöffnung aufweisen. Dabei weist der Innendurchmesser, der wenigstens einen zweiten Durchgangsöffnung einen Durchmesser auf, der um 0,15% bis 7 %, insbesondere 0,35 % bis 6 %, insbesondere 0,55 % bis 3,5 % größer ist als der Außendurchmesser der Antiresonanzelement-Vorformlinge. Bei dieser Art der Ausgestaltung können die Antiresonanzelement-Vorformlinge direkt durch die Durchgangsöffnung geschoben werden und können insbesondere auf der gesamten Länge der zweiten Positionierungsschablone form- und/oder kraftschlüssig an der Innenwandung der Durchgangsöffnungen zum Liegen kommen.

In einer weiteren Ausgestaltung kann wenigstens eine der zweiten Durchgangsöffnungen einen Haltebereich aufweisen, welcher zur endseitigen Lagerung der Antiresonanzelement-Vorformlinge dient. Ein solcher Haltebereich kann durch eine Reduktion des Innendurchmessers der zweiten Durchgangsöffnung erzielt werden. Ein in der zweiten Durchgangsöffnung angeordneter Haltebereich kann dazu dienen, eine longitudinale Bewegung der Antiresonanzelement-Vorformlinge in der Hüllrohr-Innenbohrung zu begrenzen. Im Rahmen der Vorbereitung der Anordnung wird wenigstens ein Teil der Antiresonanzelement-Vorformlinge durch die Durchgangsöffnung der Positionierungsschablone in die Hüllrohr Innenbohrung eingeführt. Die zweite Positionierungsschablone, welche am zweiten Ende des Hüllrohres angebracht ist, dient in dieser Ausführungsform einerseits dazu, die Positionierung der Antiresonanzelement-Vorformlinge an den Soll-Positionen sicherzustellen. Darüber hinaus kann eine longitudinale Bewegung der Antiresonanzelement-Vorformlinge im Rahmen des Schrittes f) "Bearbeiten" verhindert werden.

Eine Ausführungsform des Verfahrens zeichnet sich dadurch aus, dass das Hüllrohr im Bereich des zweiten Endes zumindest partiell ausgeschnitten ist, um eine zweite Gegenzentrierfläche zu bilden, die mit der zweiten Zentrierfläche formschlüssig zusammenwirkt.

Eine Ausführungsform des Verfahrens zeichnet sich dadurch aus, dass die zweite Positionierungsschablone zumindest partiell kegelstumpfartig ausgeformt ist, wobei die zweite Zentrierfläche zumindest partiell mantelflächenartig ausgebildet ist.

Eine Ausführungsform des Verfahrens zeichnet sich dadurch aus, dass das Hüllrohr im Bereich des zweiten Endes zumindest partiell kegelstumpfartig ausgeschnitten ist.

Eine Ausführungsform des Verfahrens zeichnet sich dadurch aus, dass das Verfahren den Schritt umfasst:
A/ Anfertigen einer dritten Positionierungsschablone, aufweisend eine Anzahl die dritte Positionierungsschablone durchdringende dritten Durchgangsöffnungen, angepasst zu einer Längsführung jeweils eines Antiresonanzelement-Vorformlings,
   wobei die dritte Positionierungsschablone mindestens eine dritte Zentrierfläche aufweist.

Im Rahmen des Schrittes A/ "Anfertigen" wird eine dritte Positionierungsschablone erstellt. Die dritte Positionierungsschablone kann eine zylinderartige, deckelartige oder scheibenartige Gestalt aufweisen In einer Ausführungsform weist die dritte Positionierungsschablone eine transversale Erstreckung von 5 bis 200 mm, insbesondere 15 bis 80 mm auf.

Die dritte Positionierungsschablone und das Hüllrohr können materialeinheitlich ausgestaltet sein. In einer Ausführungsform bestehen die dritte Positionierungsschablone und das Hüllrohr aus demselben Material, insbesondere aus nicht dotiertem oder dotiertem Quarzglas (SiO2), wobei die Menge der Dotierung 0,1 Gew.-% nicht überschreitet.

Die dritte Positionierungsschablone weist eine Anzahl die dritte Positionierungsschablone durchdringenden dritten Durchgangsöffnungen auf. Jede dritte Durchgangsöffnung ist derart eingerichtet, um durch einen Grundkörper der dritten Positionierungsschablone hindurch mindestens eine fluidleitende Verbindung zwischen der Hüllrohr-Innenbohrung und einem Außenraum herzustellen. Weiterhin ist der Innendurchmesser der dritten Durchgangsöffnung derart ausgelegt, dass ein Antiresonanzelement-Vorformlinge größtenteils longitudinal hindurchgeschoben werden kann. Diese Aussage beschränkt nicht die Nutzung einer Aufweitung des ARE-Außenrohres, welches der Positionierung der Antiresonanzelement-Vorformlinge dient und später genauer beschrieben wird.

Im Rahmen einer Ausführungsform kann die dritte Positionierungsschablone wenigstens eine zylinderartig ausgestaltete dritte Durchgangsöffnung aufweisen. Dabei weist der Innendurchmesser, der wenigstens einen dritten Durchgangsöffnung einen Durchmesser auf, der um 0,15% bis 7 %, insbesondere 0,35 % bis 6 %, insbesondere 0,55 % bis 3,5 % größer ist als der Außendurchmesser der Antiresonanzelement-Vorformlinge.

Sämtliche für die Positionierungsschablone und/oder die zweite Positionierungsschablone beschriebenen Eigenschaften gelten auch für die dritte Positionierungsschablone und umgekehrt.

Sämtliche für die Durchgangsöffnungen und/oder die zweiten Durchgangsöffnungen beschriebenen Eigenschaften gelten auch für die dritten Durchgangsöffnungen und umgekehrt.

Ein Ausführungsform des Verfahrens zeichnet sich dadurch aus, dass das Verfahren den Schritt umfasst:
B/ Fertigen eines rohrartigen Abschlusselementes,
wobei das Abschlusselement im Bereich eines ersten Endbereichs eine Wirkfläche ausweist, um mit der dritten Zentrierfläche zusammenzuwirken, insbesondere formschlüssig zusammenzuwirken.

Im Rahmen des Schrittes B/ "Fertigen" wird das Abschlusselement erzeugt, dass ausgestaltet ist, um mit der dritten Positionierungsschablone zusammenzuwirken. Darüber hinaus ist das rohrartige Abschlusselement ausgestaltet, um mit dem Hüllrohr verbunden zu werden. Das Abschlusselement kann rohrartig, insbesondere partiell trichterartig ausgestaltet sein und weist im Allgemeinen einen maximalen Außendurchmesser auf, der jenem des Hüllrohres entspricht.

Die dritte Positionierungsschablone und das Abschlusselement können materialeinheitlich ausgestaltet sein. In einer Ausführungsform bestehen die Positionierungsschablone und das Hüllrohr aus demselben Material, insbesondere aus nicht dotiertem oder dotiertem Quarzglas (SiO2), wobei die Menge der Dotierung 0,1 Gew.-% nicht überschreitet.

In einer Ausgestaltung können das Abschlusselement und das Hüllrohr materialeinheitlich ausgestaltet sein. In einer Ausführungsform bestehen das Abschlusselement und das Hüllrohr aus demselben Material, insbesondere aus nicht dotiertem oder dotiertem Quarzglas (SiO2), wobei die Menge der Dotierung 0,1 Gew.-% nicht überschreitet.

Eine Ausführungsform des Verfahrens zeichnet sich dadurch aus, dass das Verfahren die Schritte umfasst:
C/ Verknüpfen der dritten Positionierungsschablone mit dem ersten Endbereich,
D/ Anbinden des Abschlusselementes an das zweite Ende des Hüllrohrs,
E/ Durchschieben von wenigstens Teilen der Antiresonanzelement-Vorformlinge durch die dritten Durchgangsöffnungen zum Anordnen der Antiresonanzelement-Vorformlinge in der Hüllrohr-Innenbohrung, wobei
   die dritte Zentrierfläche derart selbstzentrierend mit der Wirkfläche zusammenwirkt, dass die Antiresonanzelement-Vorformlinge an Soll-Positionen angeordnet werden.

Im Rahmen des Schrittes C/ "Verknüpfen", erfolgt ein formschlüssiger Verbund der dritten Positionierungsschablone mit dem ersten Endbereich des Abschlusselementes. Erfindungsgemäß zentriert sich dabei die dritte Positionierungsschablone durch das Zusammenwirken der Wirkfläche mit der dritten Zentrierfläche selbst.

Im Rahmen eines weiteren Schrittes kann es zu einem kraftschlüssigen und/oder stoffschlüssigen Verbund zwischen dem Abschlusselement und der dritten Positionierungsschablone kommen. Dabei sorgt das Zusammenwirken der dritten Zentrierfläche und der Wirkfläche dafür, dass sich die relative Position der dritten Positionierungsschablone zum Abschlusselement nicht verändert.

Die dritte Positionierungsschablone kann insbesondere ein drittes Positionierelement, wie eine Ausschneidung aufweisen, welche mit einem dritten Gegenpositionierelement an dem Abschlusselement zusammenwirkt, um so eine Rotation der dritten Positionierungsschablone um seine Längsachse zu verhindern.

Im Rahmen des Schrittes D/ "Anbinden", erfolgt ein Verbinden des Abschlusselementes an das zweite Ende des Hüllrohrs. Der Schritt D/ "Anbinden" kann insbesondere zu einem schlossstoffschlüssigen Verbund zwischen dem Abschlusselement und dem Hüllrohr führen. Die dritte Positionierungsschablone dient, wie auch die Positionierungsschablone und/oder die zweite Positionierungsschablone dazu, sicherzustellen, dass die Antiresonanzelement-Vorformlinge in dem Hüllrohr und/oder der Anordnung und/oder der Vorform an Soll-Position angeordnet werden. Zu diesem Zweck weist die dritte Positionierungsschablone dritte Durchgangsöffnungen auf, die zum Anordnen der Antiresonanzelement-Vorformlinge dienen. Die dritten Durchgangsöffnungen sind ausgelegt, um die Antiresonanzelement-Vorformlinge zu halten. Nach dem Durchschieben (Schritt E/) von wenigstens Teilen der Antiresonanzelement-Vorformlinge durch die dritten Durchgangsöffnungen der dritten Positionierungsschablone werden diese durch zwei Positionierungsschablonen - die Positionierungsschablone und die dritte Positionierungsschablone - an den Soll-Positionen in der Hüllrohr-Innenbohrung gehalten. Da das Abschlusselement am zweiten Ende des Hüllrohres und die erste Positionierungsschablone am ersten Ende des Rohres angeordnet sind, erfolgt eine jeweils endseitige Lagerung der Antiresonanzelement-Vorformlinge. Diese Anordnung kann im Rahmen des Schrittes f) "Bearbeiten" durch einen Heißformprozess zu einer Vorform verarbeitet werden.

Eine Ausführungsform zeichnet sich dadurch aus, dass das Abschlusselement (auch als Pfeife bezeichnet) zu Einstellung eines Unter- oder Überdrucks im Hüllrohr dient. Das Anbringen des Abschlusselements kann mit einem thermischen Verfahren erfolgten. Ein erster Endbereich des Abschlusselements kann dabei in einem Abstand von 0,5 bis 20 mm, insbesondere 1 bis 5 mm von dem zweiten Ende des Hüllrohrs positioniert werden. Der erste Endbereich und das zweite Ende werden erhitzt und anschließend aufeinandergedrückt. Dabei entsteht eine formschlüssige Verbindung der beiden Elemente.

Bei zu hohen Krafteinwirkungen kann eine lokale Deformation des ersten Endbereich des Abschlusselements und/oder des zweiten Endes des Hüllrohrs im Rahmen des Schritt D/ "Anbinden" auftreten. Tritt diese Deformation im Bereich der Positionierungsschablone auf, kann diese einen negativen Einfluss auf die Antiresonanzelement-Vorformlinge und/oder deren Positionierung haben. Um die Gefahr einer potentiellen lokalen Deformation des ersten Endbereich des Abschlusselements und/oder des zweiten Endes des Hüllrohrs im Rahmen des Schritt D/ "Anbinden" zu reduzieren, zeichnet sich eine Ausführungsform dadurch aus, dass die Vorform ein erstes Verbindungselement aufweist. Das erste Verbindungselement kann rohrartig ausgestaltet sein und eine Verbindungselement-Innenbohrung und eine Verbindungselement-Längsachse aufweisen, entlang der sich eine von einer Innenseite und einer Außenseite begrenzte Verbindungselement-Wandung erstreckt. Das erste Verbindungselement und das Hüllrohr können materialidentisch ausgestaltet sein. Das erste Verbindungselement wirkt als eine Art Puffer zwischen dem Hüllrohr und dem Abschlusselement. Beide werden nicht direkt verbunden und eine potentielle Deformation im Bereich der Positionierungsschablone wird verhindert. Insofern kann
- ein erster Endabschnitt des ersten Verbindungselements an das zweite Ende des Hüllrohrs angebracht werden und/oder
- ein zweiter Endabschnitt des ersten Verbindungselements an den ersten Endbereich des Abschlusselements angebracht werden.

Das erste Verbindungselement kann auch zur Halterung des Hüllrohrs und/oder zur Einstellung eines Unter- oder Überdrucks im Hüllrohr dienen.

Eine Ausführungsform zeichnet sich dadurch aus, dass die Vorform ein zweites Verbindungselement aufweist. Das zweite Verbindungselement kann rohrartig ausgestaltet sein und eine Verbindungselement-Innenbohrung und eine Verbindungselement-Längsachse aufweisen, entlang der sich eine von einer Innenseite und einer Außenseite begrenzte Verbindungselement-Wandung erstreckt. Wie das erste Verbindungselement kann das zweite Verbindungselement zur Halterung des Hüllrohrs und/oder zur Einstellung eines Unter- oder Überdrucks im Hüllrohr dienen. Insofern kann ein erster Endabschnitt des zweiten Verbindungselements an das erste Ende des Hüllrohrs angebracht werden. Das zweite Verbindungselement und das Hüllrohr können materialidentisch ausgestaltet sein.

Eine Ausführungsform zeichnet sich dadurch aus, dass ein Durchmesser der Verbindungselement-Innenbohrung des ersten und/oder zweiten Verbindungselements um 2-15% größer, insbesondere 5-10% größer ist als ein Durchmesser der Hüllrohr-Innenbohrung. Der größere Innendurchmesser des ersten und/oder zweiten Verbindungselements kann es erlauben, die jeweilige Positionierungsschablone durch das Verbindungselement zu führen und in dem Hüllrohrs zu positionieren. Das erste und/oder zweite Verbindungselement können eine Länge von 50 mm bis 150 mm aufweisen, um eine potentielle Deformation im Bereich wenigstens einer der ersten, zweiten oder dritten Positionierungsschablone wirkungsvoll zu verhindern.

Der Schritt f) "Bearbeiten" kann flammenfrei ausgestaltet sein, sodass sich kein Soot oder Abbrand auf die Antiresonanzelement-Vorformlinge niederschlägt. Durch die Nutzung der Positionierungsschablone, insbesondere durch die Nutzung der Positionierungsschablone in Kombination mit der zweiten und/oder dritten Positionierungsschablone, ist es möglich, die Antiresonanzelement-Vorformlinge derart präzise an Soll-Positionen in dem Hüllrohr und/oder der Anordnung zu lagern, dass es keiner flammenbasierten Verknüpfung der Antiresonanzelement-Vorformlinge mit dem Hüllrohr vor dem Heißprozess im Rahmen des Schrittes f) "Bearbeiten" bedarf. Diese Möglichkeit erhöht nicht nur die Effizienz gegenüber vorbekannten Herstellungsverfahren, sondern reduziert auch die Dämpfung in der fertigen Vorform und der fertigen antiresonante Hohlkernfaser.

Eine Ausführungsform des Verfahrens zeichnet sich dadurch aus, dass wenigstens einer der folgenden Schritte ein flammenfreies thermisches Verbinden oder ein flammenbasiertes thermisches Verbinden umfasst:
- Schritt b) "Vorbereiten",
- Schritt d) "Anbringen",
- Schritt (ii) "Kombinieren",
- Schritt C/ "Verknüpfen" und
- Schritt D/ "Anbinden".

Um einen technisch schnell durchführbaren Prozess zu erreichen, kann es vorteilhaft sein, bestimmte Elemente der Anordnung im Rahmen von flammenbasierten thermischen Prozessen zu erstellen. Dabei handelt es sich insbesondere um solche Elemente der Anordnung, die vor dem Verarbeitungsschritt f) "Bearbeiten" noch einem Reinigungsschritt unterzogen werden können. So kann insbesondere der Schritt b) "Vorbereiten" und Schritt d) "Anbringen" kosteneffizient im Rahmen eines flammenbasierten thermischen Prozesses erfolgen. Sowohl die Antiresonanzelement-Vorformlinge als auch die Kombination aus Hüllrohr und Positionierungsschablone müssen danach allerdings gereinigt werden, um entstandene Ablagerungen aus Soot oder Abbrand zu entfernen. Die gemachte Aussage gilt auch für wenigstens einen der Schritte (ii) "Kombinieren" und C/ "Verknüpfen und D/ "Anbinden".

Steht hingegen die Präzision der Anordnung der Antiresonanzelement-Vorformlinge in der Vorform und/oder eine Reduktion der Dämpfung im Vordergrund kann es vorteilhaft sein, die erwähnten Schritte im Rahmen eines flammenfreien thermischen Verbindens durchzuführen.

Ein Ausführungsform des Verfahrens zeichnet sich dadurch aus, dass das Verfahren wenigstens einen der Schritte umfasst:
- Thermisches Fixieren, insbesondere flammenfreies thermisches Fixieren wenigstens einiger der Antiresonanzelement-Vorformlinge an der Positionierungsschablone, und/oder
- Thermisches Fixieren, insbesondere flammenfreies thermisches Fixieren wenigstens einiger der Antiresonanzelement-Vorformlinge an der zweiten Positionierungsschablone, und/oder
- Thermisches Fixieren, insbesondere flammenfreies thermisches Fixieren wenigstens einiger der Antiresonanzelement-Vorformlinge an der dritten Positionierungsschablone.

Eine Ausführungsform des Verfahrens zeichnet sich dadurch aus, dass die Antiresonanzelement-Vorformlinge vor dem Schritt f) "Bearbeiten" lediglich durch
- die Positionierungsschablone, oder
- die Positionierungsschablone und die zweite Positionierungsschablone, oder
- die Positionierungsschablone und die dritte Positionierungsschablone
und ansonsten stoffschlussfrei in der Hüllrohr-Innenbohrung gehalten werden.

Durch die Nutzung der Positionierungsschablone, insbesondere in Kombination mit der zweiten und/oder dritten der Positionierungsschablone, ist es möglich, die Antiresonanzelement Vorformling mit einer derartigen Präzision in der Hüllrohr Innenbohrung an den Soll-Positionen zu positionieren, dass es keines thermischen Verbindens der Antiresonanzelement-Vorformlinge mit der Hüllrohr-Innenbohrung vor dem Elongieren und/oder Kollabieren im Rahmen des Schrittes f) "Bearbeiten" bedarf.

Durch die selbstzentrierende Auslegung sowohl der Positionierungsschablone als auch der zweiten oder dritten Positionierungsschablone ist sichergestellt, dass auch bei einer Handhabung der Anordnung die Antiresonanzelement-Vorformlinge weiter auf der jeweiligen Soll-Position verbleiben. Insofern bedarf es keines stoffschlüssigen Verbundes zwischen den Antiresonanzelement-Vorformlingen und der Hüllrohr-Innenbohrung.

Eine Ausführungsform des Verfahrens zeichnet sich dadurch aus, dass das ARE-Außenrohr bereichsweise, vorzugsweise an einem ersten Ende des Antiresonanzelement-Vorformlinges, eine Aufweitung des Außendurchmessers aufweist, welche größer ist als ein Innendurchmesser wenigstens einer der Durchgangsöffnungen, der zweiten Durchgangsöffnungen und/oder der dritten Durchgangsöffnungen.

Die Aufweitung des Außendurchmessers dient dazu, einen vorgegebenen Haltepunkt an einem Antiresonanzelement Vorformling zu haben, wenn dieser in wenigstens eine der Durchgangsöffnungen, der zweiten Durchgangsöffnungen und der dritten Durchgangsöffnungen geführt wird. Über die Anordnung der Aufweitung auf dem Antiresonanzelement-Vorformling lässt sich dessen longitudinale Position in dem Hüllrohr steuern.

Eine Ausführungsform des Verfahrens zeichnet sich dadurch aus, dass das ARE-Außenrohr bereichsweise, vorzugsweise an einem zweiten Ende des Antiresonanzelement-Vorformlings, eine Verjüngung des Außendurchmessers aufweist, welche kleiner ist als ein Innendurchmesser wenigstens einer der Durchgangsöffnungen, der zweiten Durchgangsöffnungen und/oder der dritten Durchgangsöffnungen.

Die Verjüngung dient dazu, dass der Antiresonanzelement Vorformling leichter in wenigstens eine der Durchgangsöffnungen, der zweiten Durchgangsöffnungen und der dritten Durchgangsöffnungen eingeführt werden kann. Ein weiterer Vorteil ist, dass die Anzahl von Kanten reduziert wird und die Gefahr eines Splitterns der Antiresonanzelement-Vorformlinge beim Einführen und/oder Positionieren der Antiresonanzelement-Vorformlinge in der Durchgangsöffnung deutlich reduziert wird.

Eine Ausführungsform des Verfahrens zeichnet sich dadurch aus, dass die Positionierungsschablone und/oder die zweite Positionierungsschablone und/oder die dritte Positionierungsschablone mindestens ein Gasflusselement aufweist, welches die Hüllrohr-Innenbohrung fluidleitend mit der Umgebung der Vorform verbindet.

Das Gasflusselement kann eine Bohrung sein, welche die Positionierungsschablone und/oder die zweite und/oder die dritte Positionierungsschablone vollständig durchbringt. Ziel ist eine fluidleitende Verbindung der Hüllrohr-Innenbohrung mit der Umgebung der Vorform herzustellen. Diese dient dazu, um den Innendruck in der Hüllrohr-Innenbohrung zu regeln.

Eine Ausführungsform ist dadurch gekennzeichnet, dass die Hüllrohr-Innenbohrung durch spanende Bearbeitung erzeugt wird, insbesondere durch Bohren, Fräsen, Schleifen, Honen und/oder Polieren. Diese Bearbeitungstechniken liefern im Vergleich zu anderen bekannten Umformtechniken unter Einsatz von Hitze und Druck genauere und filigranere Strukturen und vermeiden Verunreinigungen der Oberflächen durch Formwerkzeuge.

Eine Ausführungsform ist dadurch gekennzeichnet, dass das Hüllrohr einem Außendurchmesser im Bereich von 65 bis 300mm, insbesondere von 90 bis 250 mm und insbesondere eine Länge von mindestens 1 m aufweist. Die Genauigkeit der Positionierung der Antiresonanzelement-Vorformlinge im Hüllrohr wird verbessert, indem rohrförmige Strukturelemente bereitgestellt werden, von denen mindestens ein Teil eine Wandstärke im Bereich von 0,2 und 2 mm, vorzugsweise eine Wandstärke im Bereich von 0,25 und 1 mm, hat, und wobei ein Hüllrohr mit einem Außendurchmesser im Bereich von 65 bis 300 mm, vorzugsweise mit einem Außendurchmesser im Bereich von 90 bis 250 mm, vorzugsweise mit einem Außendurchmesser im Bereich von 120 bis 200 mm bereitgestellt wird. Zusätzlich können diese Bauteile dabei jeweils eine Länge von mindestens 1 m aufweisen.

Solcherart großvolumige Strukturelemente (Antiresonanzelement-Vorformlinge, ARE-Innenrohr oder ARE-Außenrohr) vereinfachen die Handhabung. Zudem unterstützt bei vertikaler Anordnung von Hüllrohr und Strukturelementen die Gravitationskraft die Parallelität und die vertikale Ausrichtung der Längsachsen Antiresonanzelement-Vorformlinge, wenn die Antiresonanzelement-Vorformlinge jeweils an ihrem oberen stirnseitigen Ende an der Soll-Position positioniert sind.

Die oben genannten Aufgaben werden auch gelöst durch ein Verfahren zur Herstellung einer sekundären Vorform, aufweisend das Verfahren nach einem der vorhergehenden Ausführungsformen, aufweisend den Schritt
- Weiterverarbeitung der Vorform zu der sekundären Vorform,
wobei die Weiterverarbeitung eine einmalige oder wiederholte Durchführung von einem oder mehreren der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

Ausgangspunkt für die Herstellung der Antiresonanten-Hohlkernfaser ist eine Vorform. In dem erfindungsgemäßen Verfahren wird die Vorform durch die Durchführung eines oder mehrerer Heißformprozesse zu einer sekundären Vorform weiterverarbeitet.

Beim Elongieren wird die Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden. Beim Kollabieren wird eine Innenbohrung verengt oder Ringspalte zwischen rohr-förmigen Bauteil werden geschlossen oder verengt. Das Kollabieren geht in der Regel mit einem Elongieren einher. Die so hergestellte sekundäre Vorform kann zum Ziehen einer Hohlkernfaser bereits ausgelegt und geeignet sein. Optional kann die sekundäre Vorform weiterverarbeitet werden, indem sie beispielsweise elongiert oder ihr zusätzliches Mantelmaterial hinzugefügt wird.

Die oben genannten Aufgaben werden auch gelöst durch ein Verfahren zur Herstellung einer antiresonanten Hohlkernfaser aus einer Vorform, aufweisend das Verfahren nach einem der vorhergehenden Ausführungsformen, aufweisend den Schritt
- Weiterverarbeitung der Vorform zu der antiresonanten Hohlkernfaser,
wobei die Weiterverarbeitung eine einmalige oder wiederholte Durchführung von einem oder mehreren der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

Ausgangspunkt für die Herstellung der Antiresonanten-Hohlkernfaser ist eine Vorform. Durch einen Heißprozess, insbesondere durch Elongieren der Vorform wird die Antiresonante-Hohlkernfaser erzeugt.

Beim Elongieren wird die Vorform gelängt. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden. Beim Kollabieren wird eine Innenbohrung verengt oder Ringspalte zwischen rohrförmigen Bauteil werden geschlossen oder verengt.

Zum Elongieren und Erzeugen der Antiresonanten-Hohlkernfaser aus der Vorform, kann die Vorform senkrecht durch einen Ofen geführt werden. Dabei wird ein unteres Ende der Vorform, aus dem in Form einer Ziehzwiebel die Antiresonante-Hohlkernfaser gezogen wird, auf Ziehtemperatur erwärmt, wobei die gezogene Faser anschließend durch einen der Ziehrichtung entgegengerichteten Gasstrom von der Ziehtemperatur heruntergekühlt wird.

In einer Ausführungsform wird die Antiresonante-Hohlkernfaser mit einem Haftvermittler beschichtet, wobei dieser Schritt während des Ziehprozesses bei der Glasfaserherstellung ausgeführt wird, und anschließend wird in einem zweiten nachfolgenden Schritt die Antiresonante-Hohlkernfaser mit einem Kunststoff beschichtet. Dieser zweite Schritt kann zeitlich entkoppelt vom Ziehprozess der Glasfaserherstellung, ausgeführt werden.

Bei dem zur Beschichtung eingesetzten Kunststoff kann es sich um einen oder mehreren der folgenden Stoffe handeln: Polyurethan-Acrylate, Acrylate, Polyolefine, Polyamide (Nylon), Polyether, Polyurethan-Monoacrylate, Fluoralkyl-Methyiacrylate oder Polyimid.

Eine Ausführungsform ist dadurch gekennzeichnet, dass bei wenigstens einem der Schritte f) "Bearbeiten" und "Weiterverarbeitung" der Anordnung im Rahmen des Elongieren und/oder Kollabieren in der Hüllrohr-Innbohrung ein relativer Innendruck (ein Unterdruck gegenüber dem umgebenden Atmosphärendruck) im Bereich zwischen -10 bis -300 mbar, insbesondere -50 bis -250 mbar eingestellt wird. Dieses Druckfenster stellt sicher, dass das OD/ID Verhältnis (Verhältnis Außendurchmesser zu Innendurchmesser des Hüllrohrs) im Rahmen des Elongieren und/oder Kollabieren nicht zu klein wird.

Eine Ausführungsform ist dadurch gekennzeichnet, dass im Schritt "Weiterverarbeitung" im Rahmen des Elongieren der Vorform zu einer Antiresonanten-Hohlkernfaser im Kernbereich ein relativer Innendruck (ein Überdruck gegenüber dem umgebenden Atmosphärendruck) im Bereich zwischen 0,05 mbar - 20 mbar eingestellt wird. Bei einem relativen Innendruck von weniger als 0,05 mbar kann es dazu kommen, dass sich die Antiresonanzelement-Vorformlinge zu stark aufblähen. Umgekehrt, kann ein relativer Innendruck von mehr als 20 mbar im Kernbereich dazu führen, dass der Gasdruck innerhalb der Hohlkanäle der Antiresonanzelement-Vorformlinge nicht ausreicht, damit sich diese im Heißformprozess ausreichend aufweiten.

Die Temperatur einer Heizzone beim Heißformprozess sollte möglichst konstant sein. Vorteilhafterweise wird daher beim Heißformprozess ein temperaturgeregeltes Heizelement eingesetzt, dessen Soll-Temperatur auf +/- 0.1°C genau gehalten wird. Dadurch können Temperaturschwankungen im Heißformprozess auf weniger als +/- 0.5°C begrenzt werden.

Sämtliche für die Durchgangsöffnungen beschriebenen Eigenschaften und Merkmale gelten auch für die zweiten Durchgangsöffnungen und/oder die dritten Durchgangsöffnungen und umgekehrt.

Sämtliche für die Positionierungsschablone beschriebenen Eigenschaften und Merkmale gelten auch für die zweite Positionierungsschablone und/oder die dritte Positionierungsschablone und umgekehrt.

Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein. Die für die Vorform oder die Antiresonante-Hohlkernfaser offenbarten Eigenschaften und Merkmale sind auch für das Verfahren offenbart und umgekehrt.

Die Erfindung wird im Folgenden durch Figuren weiter beispielhaft illustriert. Die Erfindung ist nicht auf die Figuren beschränkt.

### Figuren

Es zeigen
- Fig. 1: einen partiellen Längsschnitt durch eine Antiresonante-Hohlkernfaser,
- Fig. 2: einen partiellen Querschnitt durch eine Antiresonante-Hohlkernfaser,
- Fig. 3: einen partiellen Längsschnitt durch Elemente einer ersten Ausführungsform einer Anordnung,
- Fig. 4: ein Anordnung gemäß Figur 3,
- Fig. 5: die Vorform gemäß Figur 3 und 4,
- Fig. 6: einen partiellen Längsschnitt durch Elemente einer weiteren Ausführungsform einer Anordnung,
- Fig. 7: ein Anordnung gemäß Figur 6,
- Fig. 8: die Vorform gemäß Figur 7 und 8,
- Fig. 9: eine weiteren Ausführungsform einer Anordnung,
- Fig. 10: die zusammengesetzte Vorform gemäß Figur 9,
- Fig. 11: die in Figur 9 dargestellte Ausführungsform ergänzt um ein Verbindungselement,
- Fig. 12: die zusammengesetzte Vorform gemäß Figur 11,
- Fig. 13: eine ersten Ausführungsform einer Positionierschablone,
- Fig. 14: eine weitere Ausführungsform einer Positionierschablone,
- Fig. 15: eine weitere Ausführungsform einer Positionierschablone,
- Fig. 16: eine partiell zusammengesetzte Vorform mit einer Positionierschablone gemäß Figur 13,
- Fig. 17: eine Vorform im Schritt f) "Bearbeiten",
- Fig. 18: ein Flussdiagramm eines Verfahrens zur Herstellung einer Vorform, und
- Fig. 19: ein Flussdiagramm eines Verfahrens zur Herstellung einer Antiresonanten-Hohlkernfaser.

### Beschreibung der Figuren

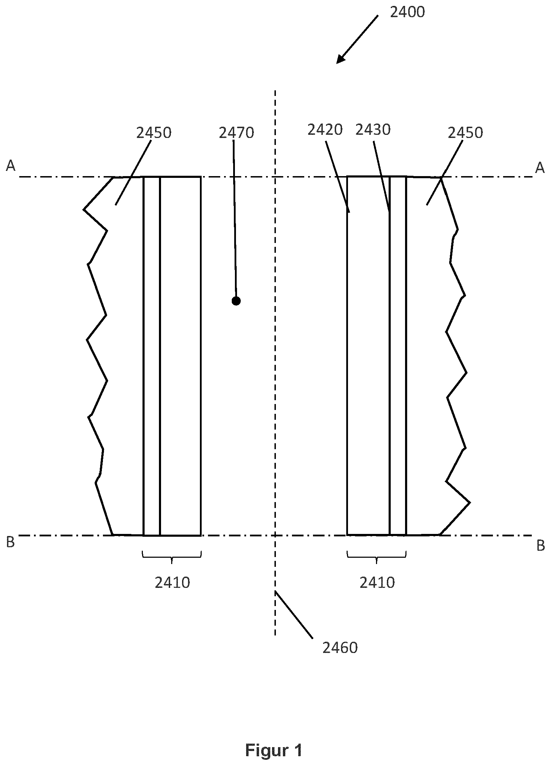

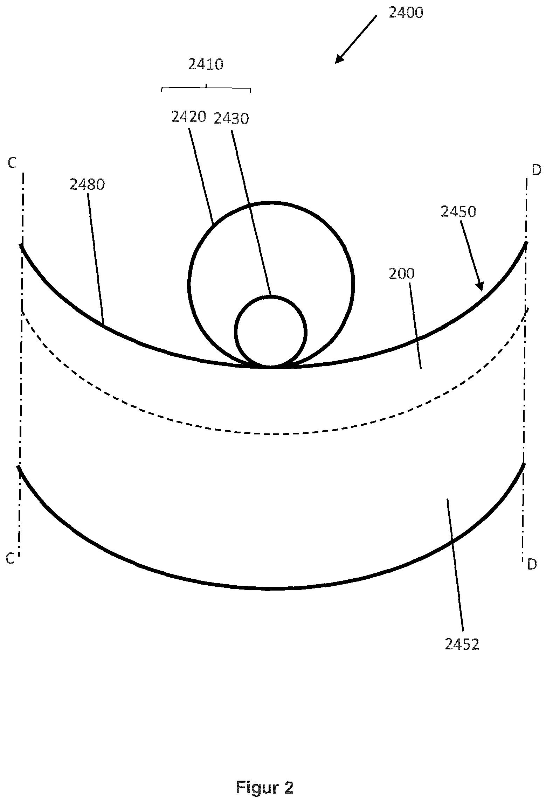

**Figur 1** zeigt einen Längsschnitt durch eine Antiresonante-Hohlkernfaser 2400. Dargestellt ist ein Abschnitt der Antiresonanten-Hohlkernfaser 2400 zwischen 2 Schnittlinien A-A und B-B. Die Antiresonante-Hohlkernfaser 2400 weist einen Mantel 2450 auf. Der Mantel 2450 ist in der dargestellten Ausführungsform der Antiresonanten-Hohlkernfaser 2400 aus einem elongierten Hüllenrohr 200 und einem elongierten Mantelmaterial 2452 aufgebaut. Da in der dargestellten Ausführungsform das Mantelmaterial 2452 und das Hüllrohrmaterial 200 materialidentisch ausgestaltet sind, ist der Übergang zwischen den beiden Materialien in Figur 2 mit einer Strichlinie markiert. Die Antiresonante-Hohlkernfaser 2400 weist einen hohlen Kern 2470 auf. Durch den hohlen Kern 2470 kann eine elektromagnetische Welle propagieren. Innerhalb des hohlen Kerns 2470 sind in -dargestellten Ausführungsform zwei Antiresonanzelemente 2410 angeordnet. Jene sind stoffschlüssig mit einer Innenfläche 2480 des Mantels 2450 verbunden. Die Antiresonanzelemente 2410 weisen ein ARE-Faser-Außenrohr 2420 und ein ARE-Faser-Innenrohr 2430 auf. Das ARE-Faser-Innenrohr 2430 ist in dem ARE-Faser-Außenrohr 2420 angeordnet. Die Antiresonanzelemente 2410 sind parallel zu einer Längsachse 2460 der Antiresonanten-Hohlkernfaser 2400 angeordnet.

Die **Figur 2** zeigt einen Querschnitt, der in Figur 1 dargestellten Antiresonanten-Hohlkernfaser 2400. Diese Figur 2 verdeutlicht die Anordnung eines Antiresonanzelementes 2410 auf einer den Hohlkern 2470 begrenzenden Innenfläche 2480. Die Antiresonanzelemente 2410 sind rohrförmig aufgebaut, wobei das ARE-Faser-Innenrohr 2430 stoffschlüssig mit dem ARE-Faser-Außenrohr 2420 verbunden ist. Das dargestellte ARE-Faser-Innenrohr 2430 und/oder ARE-Faser-Außenrohres 2420 kann teilweise eine Wandstärke im Bereich von 0,2-2 µm aufweisen. Das dargestellte Mantelrohr 2450 kann einen Außendurchmesser im Bereich von 90-250 mm bei einer Länge von mindestens 1 m aufweisen. Der Innendurchmesser des Hohlkerns 2470 beträgt vorzugsweise 10-50 Millimeter.

Die dargestellte Antiresonante-Hohlkernfaser 2400 ist hergestellt aus einer Vorform 100, welche im Folgenden näher beschreiben wird. Das Herstellen der Antiresonanten-Hohlkernfaser 2400 aus der Vorform 100 erfolgt dabei insbesondere durch ein einmaliges oder wiederholtes Durchführen von einem oder mehreren der folgenden Heißformprozesse: Elongieren 2300, Kollabieren 2100, Aufkollabieren 2200 von zusätzlichem Mantelmaterial.

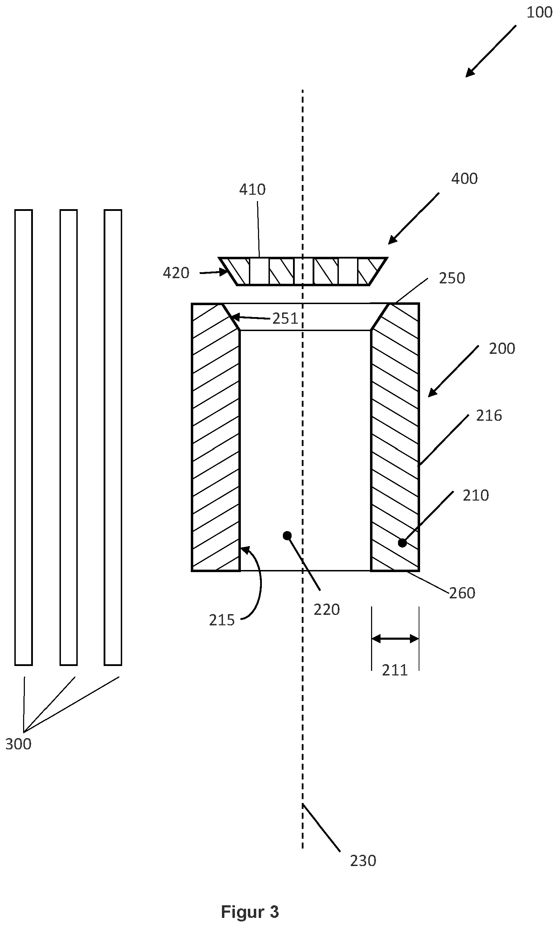

Die **Figur 3** zeigt Einzelteile einer ersten Ausführungsform einer Anordnung 110 einer erfindungsgemäßen Vorform 100 einer Antiresonanten-Hohlkernfaser 2400. Die Anordnung 110 weist ein Hüllrohr 200 auf. Das Hüllrohr 200 ist rohrartig ausgestaltet und umfasst eine Hüllrohr-Wandung 210, welche eine Dicke 211 im Bereich von 20 mm bis 90 mm aufweist. An einer Innenseite 215 des Hüllrohres 200 soll im Rahmen des Verfahrens ein Antiresonanzelement-Vorformling 300 angeordnet werden. Aus diesen Antiresonanzelement-Vorformling 300 werden durch entsprechende Prozesse die Antiresonanzelemente 2410 erstellt.

Bei bekannten Verfahren werden die Antiresonanzelement-Vorformlinge 300 einzeln in ein Hüllrohr 200 eingelegt. Ein Graphitelement kann zur Positionierung der Antiresonanzelement-Vorformlinge 300 genutzt werden. Aufgrund der Rohrgeometrien und -toleranzen werden diese Graphitelemente mit einem Spaltmaß gefertigt, was allerdings zu einem Spiel für sowohl die Graphitelement als auch für die Antiresonanzelement-Vorformlinge 300 führt. Werden so beispielsweise sechs Antiresonanzelement-Vorformlinge 300 eingeführt, kann nicht gewährleistet werden, dass immer ein exakter Winkelabstand von 60° eingehalten wird. Weiterhin ist es mit der beschriebenen Technik möglich, dass sich die Antiresonanzelement-Vorformlinge über die Länge des Rohres radial verdrehen.

Anschließend erfolgt bei bekannten Verfahren ein Fixieren der Antiresonanzelement-Vorformlinge 300 an den beiden Stirnflächen des Hüllrohres 200. Dies geschieht über punktuelles Verschmelzen mit einem Handbrenner. Dabei entsteht Soot oder Abbrand, der sich auf den Glasoberflächen niederschlägt. Dies betrifft in der Regel besonders die Stirnfläche des Hüllrohres sowie dessen Innenoberfläche und die Oberflächen der Antiresonanzelement-Vorformlinge. Aufgrund der Komplexität der erstellten Geometrie ist eine vollständige Säuberung der Anordnung kaum möglich.

Zur Überwindung dieser Nachteile wird folgendes Verfahren 2000 zur Herstellung einer Vorform 100 einer Antiresonanten-Hohlkernfaser 2400 offenbart, mit den Verfahrensschritten
a) Bereitstellen 1000 eines Hüllrohrs 200, das eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt,
b) Vorbereiten 1100 einer Anzahl von Antiresonanzelement-Vorformlingen 300, jeweils umfassend ein ARE-Außenrohr 310 und ein darin eingesetztes ARE-Innenrohr 320,
c) Präparieren 1200 einer Positionierungsschablone 400, aufweisend eine Anzahl die Positionierungsschablone 400 durchdringenden Durchgangsöffnungen 410, angepasst zu einer Längsführung jeweils eines Antiresonanzelement-Vorformlings 300, wobei die Positionierungsschablone 400 und das Hüllrohr 200 materialeinheitlich sind, so dass die Positionierungsschablone 400 und das Hüllrohr 200 im Wesentlichen denselben chemischen Stoff aufweisen und die Gesamtmasse der unterschiedlichen chemischen Elemente in der Positionierungsschablone 400 und dem Hüllrohr 200 weniger als 1 Gew.-% betragen,
d) Anbringen 1300 der Positionierungsschablone 400 an einem ersten Ende 250 des Hüllrohrs 200,
e) Einführen 1400 von wenigstens Teilen der Antiresonanzelement-Vorformlinge 300 durch die Durchgangsöffnungen 410 zum Anordnen der Antiresonanzelement-Vorformlinge in der Hüllrohr-Innenbohrung 220,
f) Bearbeiten 1500 einer Anordnung 100, umfassend das Hüllrohr 200, die Antiresonanzelement-Vorformlinge 300 und die Positionierungsschablone 400 durch einen Heißformprozess ausgewählt aus wenigstens einem von Elongieren und Kollabieren.

Dabei ist vorgesehen, dass das Verfahren derart gestaltet ist, dass die Positionierungsschablone 400 mindestens eine Zentrierfläche 420 aufweist, die mit dem ersten Ende 250 des Hüllrohrs 200 derart selbstzentrierend zusammenwirkt, dass die Antiresonanzelement-Vorformlinge 300 im Schritt e) "Einführen" 1400 an Soll-Positionen angeordnet werden.

Es erfolgt im Schritte c) "Präparieren" 1200 ein Erstellen der Positionierungsschablone 400, aufweisend eine Anzahl die Positionierungsschablone 400 durchdringenden Durchgangsöffnungen 410, angepasst zu einer Längsführung jeweils eines Antiresonanzelement-Vorformlings 300, wobei die Positionierungsschablone 400 und das Hüllrohr 200 materialeinheitlich sind.

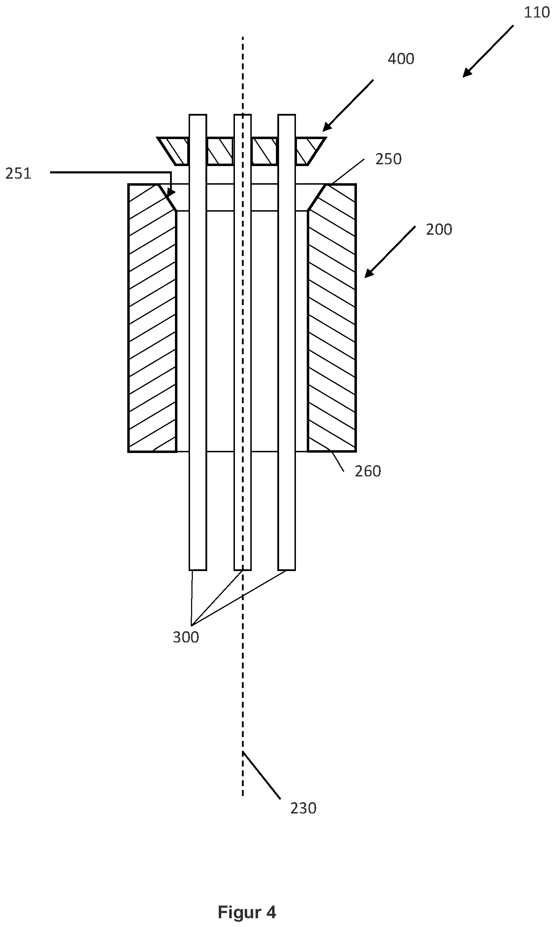

In **Figur 4** sind Teile der Antiresonanzelement-Vorformlinge durch die Durchgangsöffnungen 410 geführt und ragen in die Hüllrohr-Innenbohrung 220 hinein (Schritt e) "Einführen" 1400). Die Positionierungsschablone 400 wird im Rahmen des Schritts d) "Anbringen" 1300 in Richtung des Hüllrohres 200 abgesenkt. Nach dem kraft- und/oder formschlüssigen Anbringen der Positionierungsschablone 400 am Hüllrohres 200 wird die Anordnung 110, umfassend das Hüllrohr 200, die Antiresonanzelement-Vorformlinge 300 und die Positionierungsschablone 400, durch den Heißformprozess ausgewählt aus wenigstens einem von Elongieren und Kollabieren zur Vorform 100 weiterverarbeitet.

Die zu verwendete Positionierungsschablone 400 ist so konzipiert, dass die Durchgangsöffnungen 410 für die Antiresonanzelement-Vorformlinge 300 immer im gleichen Winkelabstand zueinanderstehen und somit automatisch eine Symmetrie gegeben ist. Weiterhin ist in der Mitte der Scheibe ein Gasflusselement für den Gasfluss vorgesehen. So ist im späteren Prozess beispielsweise das Spülen oder Reinigen mit Gas sowie das Anlegen von Unterdruck im gesamten Rohraufbau möglich. Durch die Größe der Bohrung kann der Gasdurchfluss durch den Kernbereich und die Antiresonanzelement-Vorformlinge beeinflusst werden.

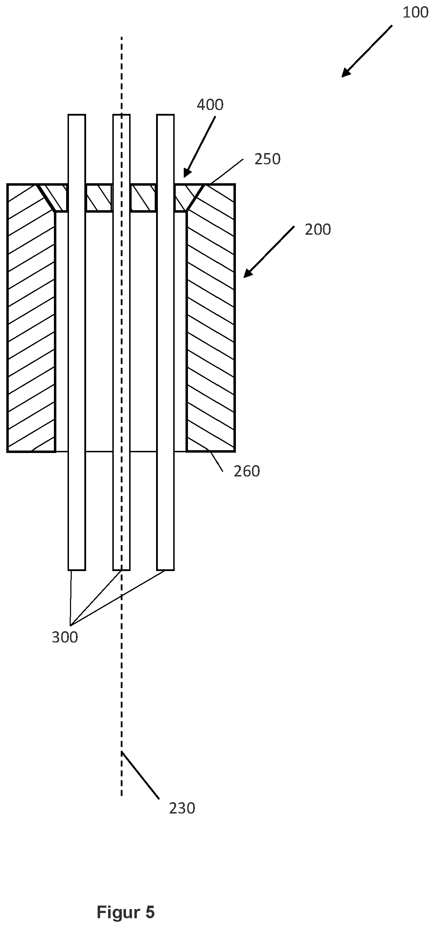

Die **Figur 5** zeigt die Vorform 100. Durch das selbstzentrierende Zusammenwirken der Zentrierfläche 420 der Positionierungsschablone 400 mit dem ersten Ende 250 des Hüllrohrs 200 verbleiben die Antiresonanzelement-Vorformlinge im Schritt e) "Einführen 1400 und insbesondere auch im Schritt f) "Bearbeiten" 1500 an vordefinierten Soll-Positionen.

Ein Aspekt des Verfahrens ist, dass das exakte Zusammenführen von Hüllrohr 200 und Antiresonanzelement-Vorformlingen 300 direkt in einer Bearbeitungsanlage (in der Regel eine vertikale Glasdrehbank) stattfinden kann und somit nur ein Prozessschritt für Zusammenbau und Ausziehen der gesamten Vorform notwendig ist.

Eine Ausführungsform des Verfahrens 2000 zeichnet sich dadurch aus, dass die Antiresonanzelement-Vorformlinge 300 im Schritt f) "Bearbeiten" 1500 flammenfrei an der Hüllrohr-Wandung 210 thermisch fixiert werden. Ein vorhergehendes, punktuelles Anschmelzen der Antiresonanzelement-Vorformlinge 300 and dem Hüllrohr 200, insbesondere der Hüllrohr-Wandung 210, insbesondere mit dem Handbrenner entfällt.

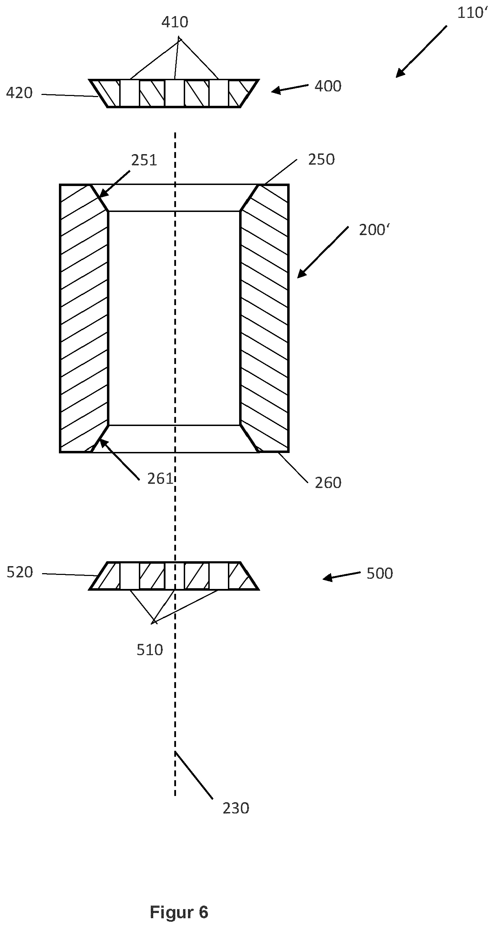

Die **Figuren 6****,** **7** und **8** zeigen eine weitere Ausführungsform der Anordnung 110' und der Vorform 100', die mit dem offenbarten Verfahren hergestellt wird. Die Ausführungsform gemäß Figuren 6, 7 und 8 stimmt weitgehend mit der vorstehend beschriebenen und in den Figuren 3, 4, 5 und 6 dargestellten Ausführungsform überein, so dass zur Vermeidung von Wiederholungen auf die vorstehende Beschreibung verwiesen wird. Eine Struktur, die aus der Beschreibung der Figuren 3, 4, 5 und 6 wiederholt wird, weist dasselbe Bezugszeichen auf.

Abwandlungen einer gegenüber der in den Figuren 3, 4, 5 und 6 gezeigten Struktur weisen dasselbe Bezugszeichen mit einem Apostroph (') auf.

Abweichend von den Figuren 3 und 4 weist das gezeigte Hüllrohr 200' nicht nur an dem ersten Ende 250 eine Gegenzentrierfläche 251 auf. Zusätzlich weist das Hüllrohr 200' an einem zweiten Ende 260 eine zweite Gegenzentrierfläche 261 auf. Im Rahmen des Verfahrens sind die Schritte vorgesehen:
(i) Erstellen einer zweiten Positionierungsschablone 500, aufweisend eine Anzahl die zweite Positionierungsschablone 500 durchdringende zweiten Durchgangsöffnungen 510, angepasst zu einer Längsführung jeweils eines Antiresonanzelement-Vorformlings 300, wobei die zweite Positionierungsschablone 500 und das Hüllrohr 200' materialeinheitlich sind, so dass die zweite Positionierungsschablone 500 und das Hüllrohr 200 im Wesentlichen denselben chemischen Stoff aufweisen und die Gesamtmasse der unterschiedlichen chemischen Elemente in der zweiten Positionierungsschablone 500 und dem Hüllrohr 200 weniger als 1 Gew.-% betragen,
(ii) Kombinieren der zweiten Positionierungsschablone 500 mit dem zweiten Ende 260 des Hüllrohrs 200'.

In der dargestellten Ausführungsform ist die Positionierungsschablone 500 zumindest partiell kegelstumpfartig ausgeformt. Die zweite Zentrierfläche 520 ist dabei partiell mantelflächenartig ausgebildet.

Das Hüllrohr 200' ist im Bereich des zweiten Endes 260 zumindest partiell ausgeschnitten, um eine zweite Gegenzentrierfläche 261 zu bilden, die mit der zweiten Zentrierfläche 520 formschlüssig zusammenwirken kann. In Figur 6 ist das Hüllrohr 200' im Bereich des zweiten Endes 260 zumindest partiell kegelstumpfartig ausgeschnitten.

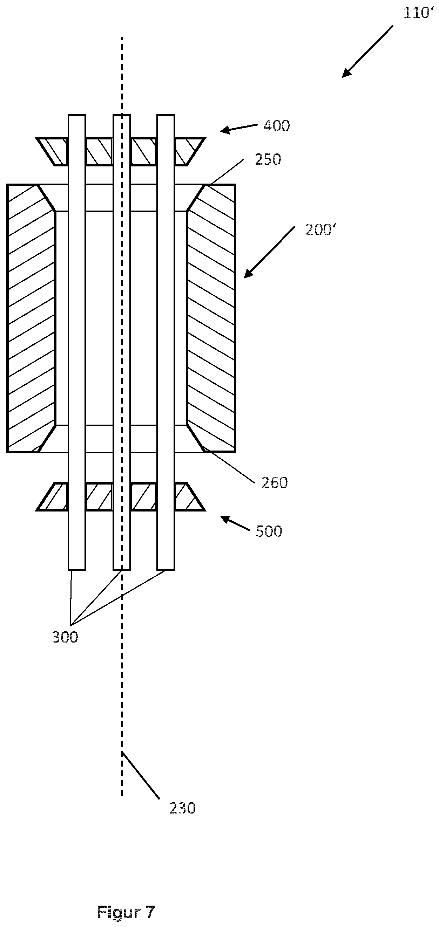

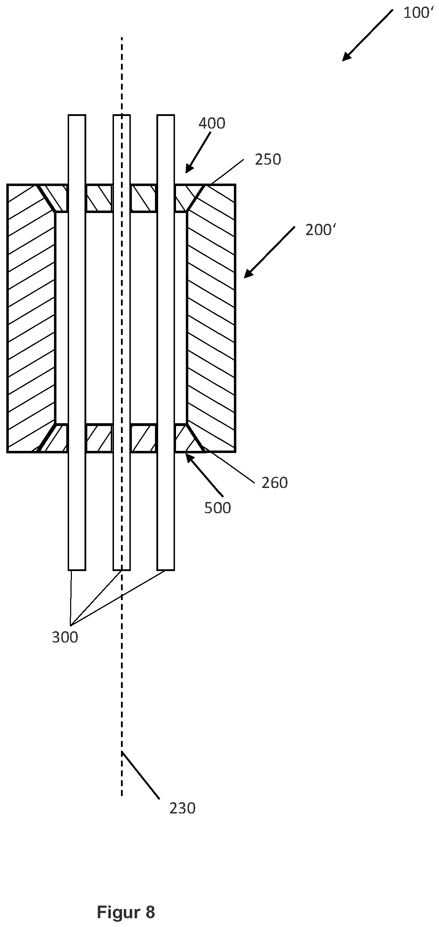

Die Figur 7 zeigt den Schritt (iii) "Einschieben" von wenigstens Teilen der Antiresonanzelement-Vorformlinge 300 durch die zweiten Durchgangsöffnungen 510 der zweiten Positionierungsschablone 500. Im Anschluss erfolgt der Schritt f) "Bearbeiten" 1500 der Anordnung, umfassend das Hüllrohr 200', die Antiresonanzelement-Vorformlinge 300 und die Positionierungsschablone 400 und zweite Positionierungsschablone 500, durch einen Heißformprozess ausgewählt aus wenigstens einem von Elongieren und Kollabieren. Kombiniert wirkt die zweite Zentrierfläche 520 mit dem zweiten Ende 260 des Hüllrohrs 200' derart selbstzentrierend zusammen, dass die Antiresonanzelement-Vorformlinge in dem Schritt (iii) "Einschieben" und insbesondere im Schritt f) "Bearbeiten" 1500 an Soll-Positionen angeordnet werden, was Figur 8 verdeutlicht.

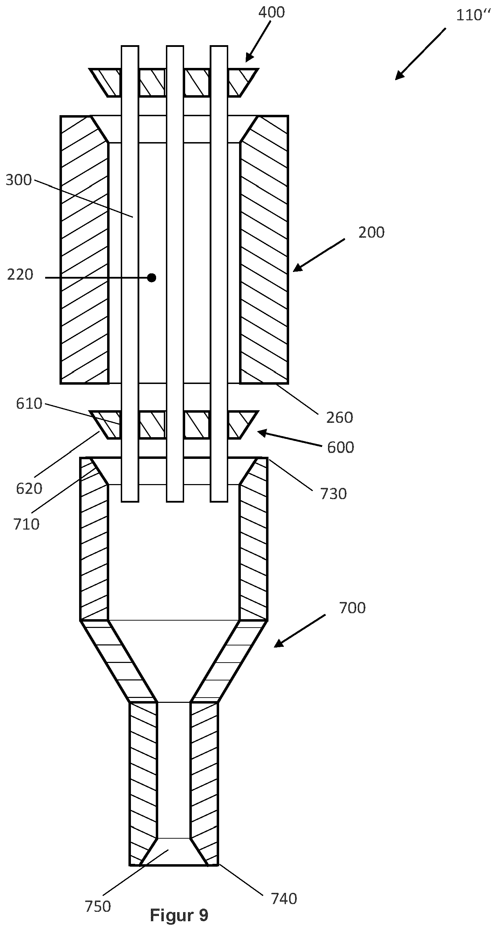

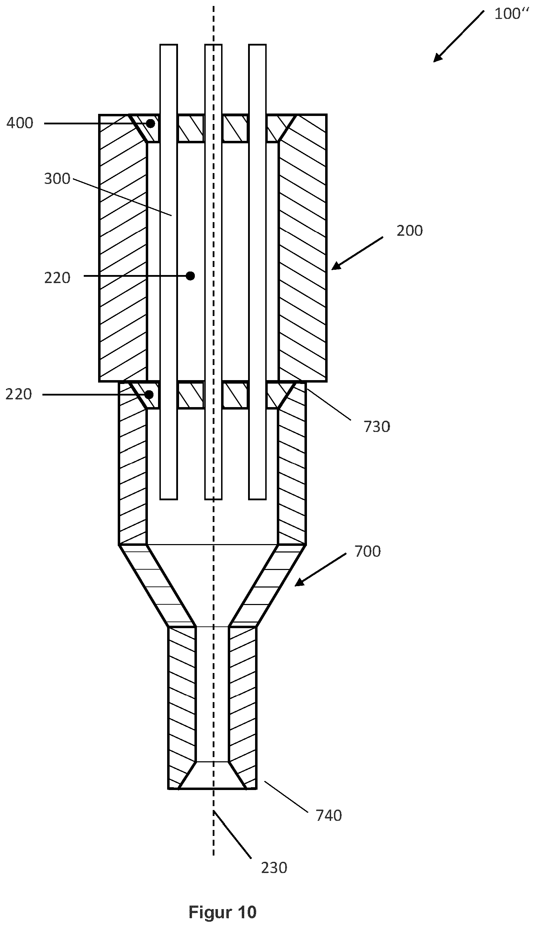

Die **Figuren 9** und **10** zeigen eine Ausführungsform einer Anordnung 110" und einer Vorform 100", die mit dem offenbarten Verfahren hergestellt wird. Die Ausführungsform gemäß Figuren 9 und 10 stimmt weitgehend mit der vorstehend beschriebenen und in den Figuren 3, 4, 5 und 6 dargestellten Ausführungsform überein, so dass zur Vermeidung von Wiederholungen auf die vorstehende Beschreibung verwiesen wird. Eine Struktur, die aus der Beschreibung der Figuren 3, 4, 5 und 6 wiederholt wird, weist dasselbe Bezugszeichen auf. Abwandlungen einer gegenüber der in den Figuren 3, 4, 5 und 6 gezeigten Struktur weisen dasselbe Bezugszeichen mit zwei Apostroph (") auf.

Die Figur 9 zeigt die Anordnung 110" welche durch Elongieren und/oder Kollabieren im Rahmen des Schrittes f) "Bearbeiten" zu einer Vorform 100" umgeformt werden kann. Das dazu nötige Verfahren umfasst den Schritt:
A/ Anfertigen einer dritten Positionierungsschablone 600, aufweisend eine Anzahl die dritte Positionierungsschablone 600 durchdringende dritten Durchgangsöffnungen 610, angepasst zu einer Längsführung jeweils eines Antiresonanzelement-Vorformlings 300, wobei die dritte Positionierungsschablone 600 mindestens eine dritte Zentrierfläche 620 aufweist.

Um die dargestellte Vorform 100" zu erstellen bedarf es des Schrittes:
B/ Fertigen eines rohrartigen Abschlusselementes 700, wobei das Abschlusselement 700 im Bereich eines ersten Endbereichs 730 eine Wirkfläche 710 ausweist, um mit der dritten Zentrierfläche 620 zusammenzuwirken, insbesondere formschlüssig zusammenzuwirken.

Die dargestellte Anordnung 110" weist ein trichterartiges Abschlusselement 700 auf. Der Außendurchmesser des Abschlusselementes 700 im ersten Endbereichs 730 entspricht im Wesentlichen jenem Außendurchmesser des Hüllrohrs 200. Am entgegengesetzten zweiten Endbereich 740 ist der Durchmesser des Abschlusselementes 700 verkleinert, um einen Auslass 790 zu bilden. Dieser Auslass 790 kann unter anderem zur Regulierung der Druckverhältnisse in dem wenigstens einen Antiresonanzelement-Vorformling in 300 bzw. innerhalb des Hüllrohr Innenbohrung 220 dienen.

Die Figur 10 zeigt die fertige Vorform 100", welche - ausgehend von Figur 9 - nach einem Durchlaufen der folgenden Schritte entsteht
C/ Verknüpfen der dritten Positionierungsschablone 600 mit dem ersten Endbereich 730,
D/ Anbinden des Abschlusselementes 700 an das zweite Ende 260 des Hüllrohrs 200,
E/ Durchschieben von wenigstens Teilen der Antiresonanzelement-Vorformlinge 300 durch die dritten Durchgangsöffnungen 610 zum Anordnen der Antiresonanzelement-Vorformlinge 300 in der Hüllrohr-Innenbohrung 220, wobei die dritte Zentrierfläche 620 derart selbstzentrierend mit der Wirkfläche 710 zusammenwirkt, dass die Antiresonanzelement-Vorformlinge 300 an Soll-Positionen angeordnet werden.

Im dargestellten Ausführungsbeispiel werden die Antiresonanzelement-Vorformlinge 300 endseitig an zwei Positionen gehalten. Zum einen werden die Antiresonanzelement-Vorformlinge 300 durch die Positionierungsschablone 400 am ersten Ende 250 des Hüllrohres 200 gehalten. Zusätzlich sorgt die dritte Positionierungsschablone 600 für eine weitere endseitige Halterung der Antiresonanzelement-Vorformlinge 300. Gemeinsam stellen die Positionierungsschablone 400 und die dritte Positionierungsschablone 600 sicher, dass die Antiresonanzelement-Vorformlinge 300 an Soll-Positionen innerhalb der Hüllrohr-Innenbohrung 220 gehalten werden.

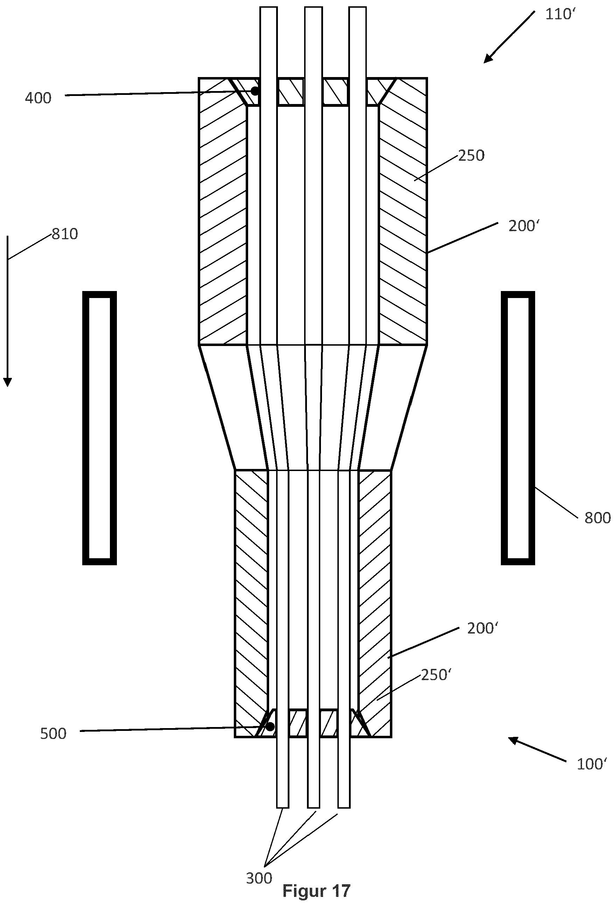

Die Antiresonanzelement-Vorformlinge 300 können im Schritt f) "Bearbeiten" flammenfrei an der Hüllrohr-Innenbohrung thermisch fixiert werden. Diesen Schritt verdeutlicht insbesondere die Figur 17, welche das Durchlaufen der Anordnung durch einen elektrischen Ofen 800 im Rahmen des Schrittes f) "Bearbeiten" darstellt. Es wird insofern auf die dort gemachten Ausführungen verwiesen.

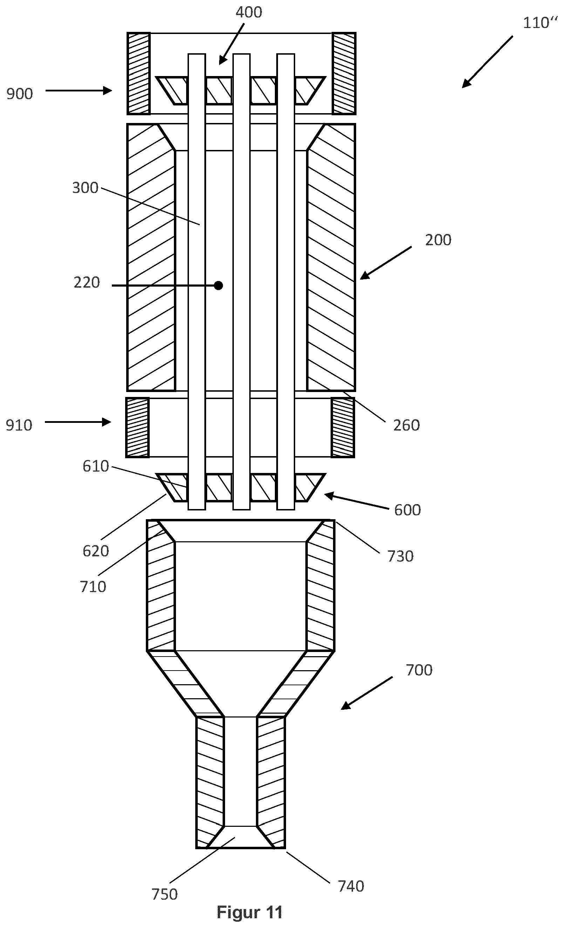

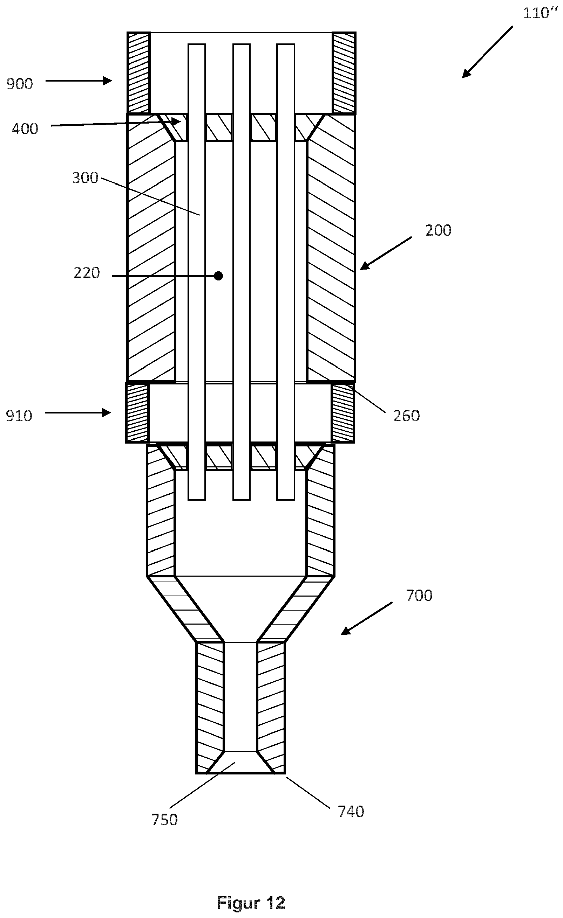

Die **Figuren 11** und **12** zeigen eine Ausführungsform einer Anordnung 110" und einer Vorform 100", welche in ihrer äußeren Form analog ist zu der in Figur 9 und 10 dargestellten. Insofern wird zur Vermeidung von Wiederholungen auf die vorstehende Beschreibung verwiesen. Abweichend weist die Anordnung 110" ein erstes Verbindungselement 900 und ein zweites Verbindungselement 910 auf. Dabei ist das erste Verbindungselement 900 an dem ersten Ende 250 des Hüllrohr 200 und das zweite Verbindungselement 910 an dem zweiten Ende 260 des Hüllrohres angeordnet.

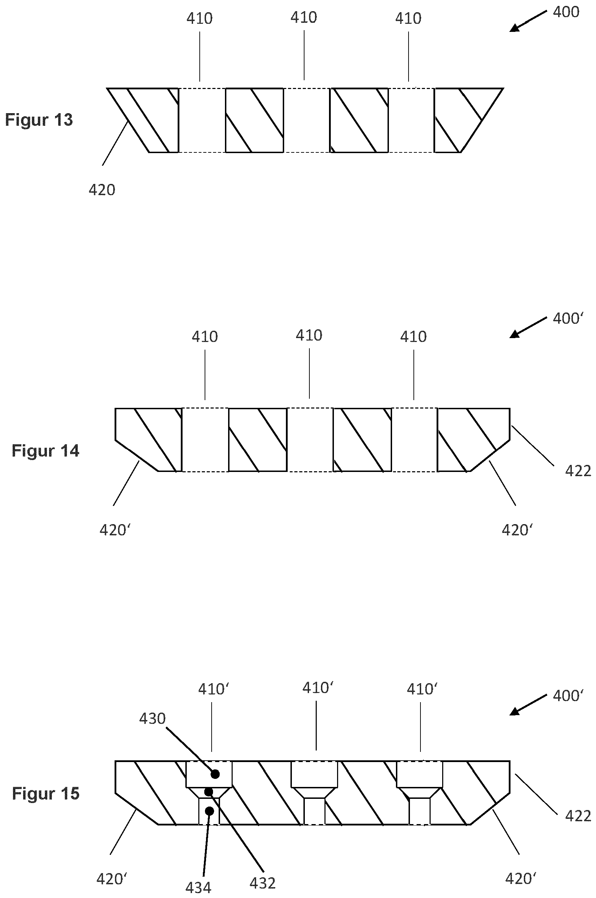

Die **Figuren 13 bis 15** zeigen unterschiedliche Ausführungsform der Positionierungsschablone 400, 400', 400".

In Figur 13 ist eine scheibenartige Positionierungsschablone 400 dargestellt. Diese Positionierungsschablone ist kegelstumpfartig ausgeformt, so dass die Seitenflächen vollständig die Zentrierflächen 420 bilden. Die Durchgangsöffnungen 410 sind rohrartige ausgestaltet und besitzen über deren Längserstreckung einen gleichbleibenden Innendurchmesser 411.

Die Differenz des Innendurchmessers der Durchgangsöffnungen 410 von einem Außendurchmesser der Antiresonanzelement Vorformling 300 sollte zwischen 0,15% bis 7 %, insbesondere 0,35 % bis 6 %, insbesondere 0,55 % bis 3,5 % betragen.

Die Positionierungsschablone 400' in **Figur 14** weist stärker geneigte Seitenflächen auf, die die Zentrierflächen 420 bilden. Oberhalb der Zentrierflächen 420 ist Kragenbereich 422 angeordnet. Das erste Ende 250 des Hüllrohrs 200 kann derart gestaltet sein, dass
- lediglich die Gegenzentrierfläche 251 mit der Zentrierfläche 420 zusammenwirkt, oder
- zum einen die Gegenzentrierfläche 251 mit der Zentrierfläche 420 zusammenwirkt und zum anderen der Kragenbereich 422 mit einem Gegenkragenbereich am Hüllrohr 200, insbesondere form- und/oder kraftschlüssig zusammenwirkt. Ein solches Zusammenwirken verstärkt die selbstzentrierende Wirkung.

Die Durchgangsöffnungen 410 sind rohrartige ausgestaltet.

Die **Figur 15** zeigt eine Ausführungsform der Positionierungsschablone 400", welche in ihrer äußeren Form analog ist zu der in Figur 14 dargestellten. Abweichend weist die Positionierungsschablone 400" keine rohrartigen Durchgangsöffnungen 410 auf, welche einen gleichbleibenden Innendurchmesser besitzen. Vielmehr sind die Durchgangsöffnungen 410' abschnittsweise rohrartig ausgestaltet, wobei zwei Abschnitte einen unterschiedlichen Innendurchmesser aufweisen. Die Durchgangsöffnungen 410' weisen
- ein rohrartig gestalteten Aufnahmebereich 430 auf, dessen Innendurchmesser angepasst ist an den Außendurchmesser der Antiresonanzelement-Vorformlinge 300, um diese zumindest partiell führen zu können,
- ein rohrartig gestalteten Haltebereich 434, dessen Innendurchmesser kleiner ist als der Außendurchmesser der Antiresonanzelement- Vorformlinge 300, und der zur Halterung der Antiresonanzelement-Vorformlinge 300 ausgelegt ist, und
- ein trichterartigen Übergangsbereich 432, der den Aufnahmebereich 430 und Haltebereich 434 verbindet.

Diese Art der Ausgestaltung der Durchführungen 410 kann zwei Aufgaben erfüllen. Der Aufnahmebereich 430 dient insbesondere zur Positionierung der Antiresonanzelement-Vorformlinge 300 in der Hüllrohr-Innenbohrung 220. Die vorrangige Aufgabe des Aufnahmebereichs 430 ist folglich ein Verhindern von transversalen Bewegungen der Antiresonanzelement-Vorformlinge 300. Der Haltebereich 434 dient hingegen vorrangig dazu, eine longitudinale Bewegung des jeweiligen Antiresonanzelement-Vorformlings 300 zu verhindern.

Sämtliche für die Positionierungsschablone 400,400',400" in den Figuren 13 bis 15 dargestellten Merkmale und beschriebenen Eigenschaften gelten auch für die zweite Positionierungsschablone 500 und/oder die dritte Positionierungsschablone 600.

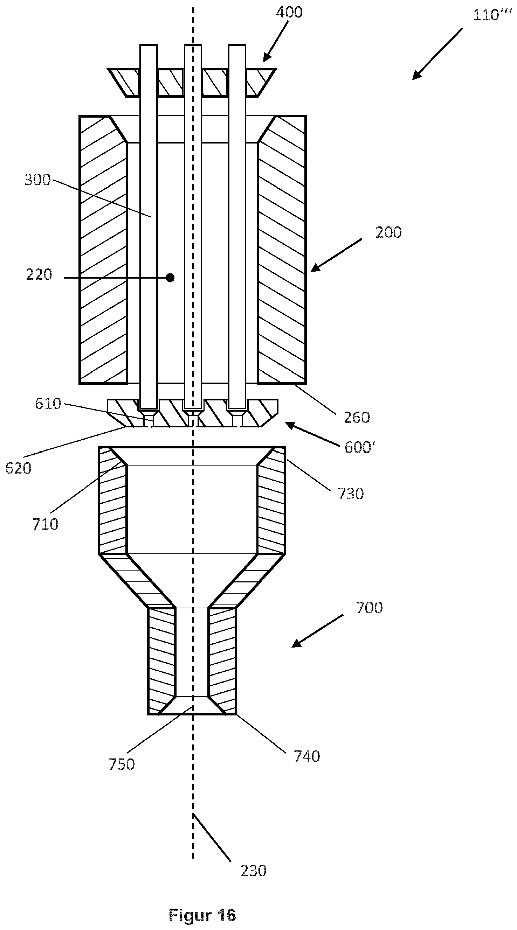

Die in **Figur 16** gezeigte Anordnung 110‴ für eine Vorform entspricht jener in Figur 9 gezeigten Anordnung 100" für eine Vorform 100". Die beiden Ausführungsformen unterscheiden sich lediglich dadurch, dass die in Figur 16 gezeigte Anordnung 110‴ eine dritte Positionierungsschablone 600' aufweist, die strukturell entsprechend der Figur 15 ausgestaltet ist. Die Positionierungsschablone 400" verhindert eine longitudinale Bewegung der Antiresonanzelement-Vorformlinge 300. Diese werden durch die rohrartig gestalteten Aufnahmebereiche 430 transversal positioniert und durch die Haltebereiche 434 longitudinal positioniert. Dieses verhindert ein Abweichen der Antiresonanzelement Vorformlinge 300 von der Soll-Position.

Wie dargelegt erfolgt in bekannten Verfahren ein Fixieren der Antiresonanzelement-Vorformlinge 300 an den beiden Stirnflächen des Hüllrohres 200. Dies geschieht über punktuelles Verschmelzen mit einem Handbrenner. Dabei entsteht Soot oder Abbrand, der sich auf den Glasoberflächen niederschlägt und so zu einer Reduktion der Qualität der Vorform führt. Zur Überwindung dieses Nachteiles zeichnet sich eine Ausführungsform des hier beschriebenen Verfahrens dadurch aus, dass die Antiresonanzelement-Vorformlinge 300 im Schritt f) "Bearbeiten" 1500 flammenfrei an der Hüllrohr-Wandung 210 thermisch fixiert werden.

Die **Figur 17** zeigt die Erstellung der Figur 8 gezeigten Vorform 100' im Rahmen des Schritts f) "Bearbeiten" 1500. Der Bewegungspfeil 810 verdeutlicht die Richtung aus der die Anordnung 110' in einen elektrischen Ofen 800 - eine flammenfreie Wärmequelle - eingefahren wird, so dass die Vorform 100' entsteht.

Die dargestellte Anordnung 110' umfasst das Hüllrohr 200'. Die Positionierungsschablone 400 und die zweite Positionierungsschablone 500 sind kegelstumpfartig ausgeformt. Die Zentrierfläche 420 und die zweite Zentrierfläche 520 sind dabei partiell mantelflächenartig ausgebildet. Insofern können das Hüllrohr 200 und die Positionierungsschablone 400 sowie die zweite Positionierungsschablone 500 derart ausgestaltet, dass dieses jeweils formschlüssig zusammenwirken können. Zusammengeführt zu der Anordnung 110' werden die Elemente im Rahmen der Schritte:
- Anbringen der Positionierungsschablone 400 an einem ersten Ende 250 des Hüllrohrs 200',
- Kombinieren der zweiten Positionierungsschablone 500 mit dem zweiten Ende 160 des Hüllrohrs 200',
- Einführen von wenigstens Teilen der Antiresonanzelement-Vorformlinge 300 durch die Durchgangsöffnungen 410 zum Anordnen der Antiresonanzelement-Vorformlinge in der Hüllrohr-Innenbohrung, und
- Einschieben von wenigstens Teilen der Antiresonanzelement-Vorformlinge 300 durch die zweiten Durchgangsöffnungen 510 der zweiten Positionierungsschablone 500.

In Figur 17 ist als flammenfreie Wärmequelle ein elektrischer Ofen 800 aufgeführt. Die Anordnung wird in der heißen Zone des Ofens auf eine Temperatur erhitzt bei der das Quarzglas dort deutlich niedrig-viskoser wird und eine Verformung zulässt. Gleichzeitig wird einer der beiden Arbeitsköpfe, in denen die Anordnung eingespannt ist, verfahren, sodass sich das Hüllrohr 200 zu einem dünneren Querschnitt verjüngt und dabei kollabiert wird. Die Verbindung zwischen Antiresonanzelement-Vorformlinge 300 und Hüllrohr 200 entsteht genau an dieser Stelle, wo das Rohr erhitzt und verjüngt wird und dies durch den Fortschritt des Prozesses sukzessive über die gesamte Länge.

Durch die Verwendung eines elektrischen Ofens 800 entfällt der Handbrenner-Prozess zum Fixieren der Antiresonanzelement-Vorformlinge 300. Bei Handbrenner-Prozessen gibt es Probleme mit Abbrand und Soot-Bildung, die mit der Brennernutzung einher gehen. Der Beschlag kann nachträglich nicht vollständig entfernt werden, sodass bereits das Vorprodukt mit Verschmutzungen weiterverarbeitet wird. Folglich können unter anderem Blasenbildung, Einschlüsse und später Faserbruch beim Ausziehen entstehen. Bei Verwendung des Ofens entfallen die genannten Probleme, sodass eine saubere Vorform produziert werden kann.

Im Rahmen des Schritts f) "Bearbeiten" 1500 kann der Antiresonanzelement-Vorformling 300 lediglich durch
- die Positionierungsschablone 400,400',400", oder
- die Positionierungsschablone 400,400',400" und die zweite Positionierungsschablone 500, oder
- die Positionierungsschablone 400,400',400" und die dritte Positionierungsschablone 600,600'
und ansonsten stoffschlussfrei in der Hüllrohr-Innenbohrung 220 gehalten werden.

Ein Aspekt des Verfahrens ist, dass das exakte Zusammenführen von Hüllrohr 200 direkt in einer Bearbeitungsanlage (wie etwa eine vertikale Glasdrehbank) stattfinden kann und somit nur ein Prozessschritt für Zusammenbau und Ausziehen der gesamten Vorform notwendig ist.

In Figur 17 sind die gezeigten Antiresonanzelement-Vorformling 300 lediglich durch die Positionierungsschablone 400,400',400" und die zweite Positionierungsschablone 500 und ansonsten stoffschlussfrei in der Hüllrohr-Innenbohrung 220 gehalten.

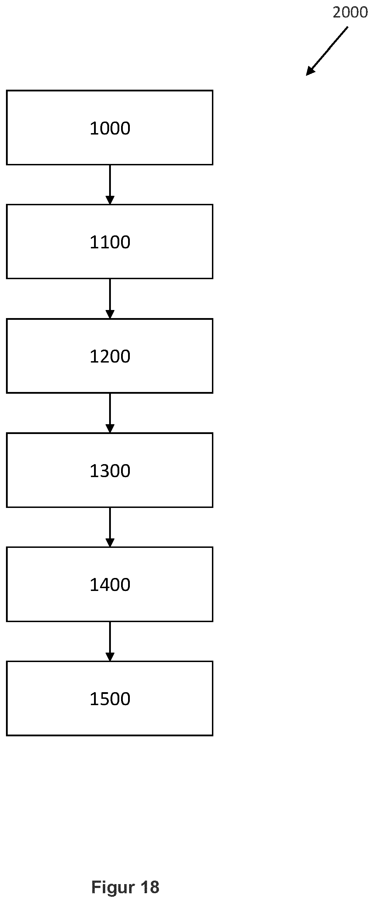

Die **Figur 18** zeigt eine Ausführungsform eines Verfahrens 2000 zur Herstellung einer Vorform 100 einer Antiresonanten-Hohlkernfaser 2400, mit den Verfahrensschritten
a) Bereitstellen 1000 eines Hüllrohrs 200, das eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt,
b) Vorbereiten 1100 einer Anzahl von Antiresonanzelement-Vorformlingen 300, jeweils umfassend ein ARE-Außenrohr 310 und ein darin eingesetztes ARE-Innenrohr 320,
c) Präparieren 1200 einer Positionierungsschablone 400,400',400", aufweisend eine Anzahl die Positionierungsschablone 400,400',400" durchdringenden Durchgangsöffnungen 410,410', angepasst zu einer Längsführung jeweils eines Antiresonanzelement-Vorformlings 300, wobei die Positionierungsschablone 400,400',400" und das Hüllrohr 200 materialeinheitlich sind, so dass die Positionierungsschablone 400,400',400" und das Hüllrohr 200 im Wesentlichen denselben chemischen Stoff aufweisen und die Gesamtmasse der unterschiedlichen chemischen Elemente in der Positionierungsschablone 400,400',400" und dem Hüllrohr 200 weniger als 1 Gew.-% betragen,
d) Anbringen 1300 der Positionierungsschablone 400,400',400" an einem ersten Ende 250 des Hüllrohrs 200,
e) Einführen 1400 von wenigstens Teilen der Antiresonanzelement-Vorformlinge 300 durch die Durchgangsöffnungen 410,410' zum Anordnen der Antiresonanzelement-Vorformlinge in der Hüllrohr-Innenbohrung 220,
f) Bearbeiten 1500 einer Anordnung 110, umfassend das Hüllrohr 200, die Antiresonanzelement-Vorformlinge 300 und die Positionierungsschablone 400,400',400", durch einen Heißformprozess ausgewählt aus wenigstens einem von Elongieren und Kollabieren.

Dabei ist vorgesehen, dass das Verfahren derart gestaltet ist, dass die Positionierungsschablone 400,400',400" mindestens eine Zentrierfläche 420 aufweist, die mit dem ersten Ende 250 des Hüllrohrs 200 derart selbstzentrierend zusammenwirkt, dass die Antiresonanzelement-Vorformlinge 300 im Schritt e) "Einführen" 1400 an Soll-Positionen angeordnet werden.

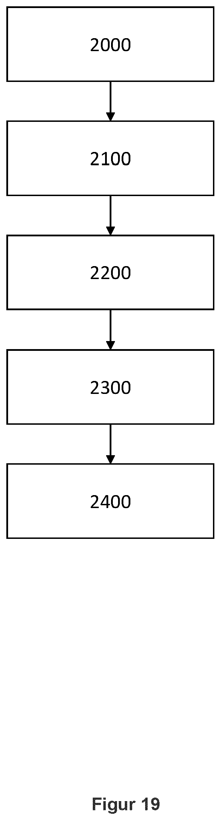

Die **Figur 19** zeigt eine Ausführungsform eines Verfahrens zur Herstellung einer Antiresonanten-Hohlkernfaser 2400 aus einer Vorform 100, insbesondere hergestellt nach einem der vorhergehenden Verfahrensschritte 1000 bis 1500, aufweisend den Schritt
- Weiterverarbeitung der Vorform 100 zu der Antiresonanten-Hohlkernfaser 2400,
wobei die Weiterverarbeitung eine einmalige oder wiederholte Durchführung von einem oder mehreren der folgenden Heißformprozesse umfasst:
- Kollabieren 2100,
- Aufkollabieren 2200 von zusätzlichem Mantelmaterial, und
- Elongieren 2300.

Sämtliche für die Durchgangsöffnungen beschriebenen Eigenschaften und Merkmale gelten auch für die zweiten Durchgangsöffnungen und/oder die dritten Durchgangsöffnungen und umgekehrt.

Sämtliche für die Positionierungsschablone beschriebenen Eigenschaften und Merkmale gelten auch für die zweite Positionierungsschablone und/oder die dritte Positionierungsschablone und umgekehrt.

Sämtliche für das Verfahren beschriebenen Eigenschaften und Merkmale gelten auch für die Vorform und/oder die Antiresonante-Hohlkernfaser und umgekehrt.

Alle in den Ansprüchen, der Beschreibung und in den Figuren angegebenen physikalischen Größen werden, wenn nichts anderes angegeben ist, unter Normalbedingungen gemäß DIN 1343 bestimmt. Die Aussage "unter Normalbedingungen" bezieht sich auf Messungen unter Bedingungen gemäß DIN 1343. Die für die Vorrichtungen, insbesondere Vorform, sekundäre Vorform oder Antiresonante-Hohlkernfaser, offenbarten Merkmale sind auch für das Verfahren offenbart und umgekehrt.

## Patentansprüche

1. Verfahren zur Herstellung einer Vorform (100,100',100") einer antiresonanten Hohlkernfaser, mit den Schritten:
a) Bereitstellen (1000) eines Hüllrohrs (200), das eine Hüllrohr-Innenbohrung und eine Hüllrohr-Längsachse aufweist, entlang der sich eine von einer Innenseite und einer Außenseite begrenzte Hüllrohr-Wandung erstreckt,
b) Vorbereiten (1100) einer Anzahl von Antiresonanzelement-Vorformlingen (300), jeweils umfassend ein ARE-Außenrohr und ein darin eingesetztes ARE-Innenrohr,
c) Präparieren (1200) einer Positionierungsschablone (400,400',400"), aufweisend eine Anzahl die Positionierungsschablone (400,400',400") durchdringenden Durchgangsöffnungen, angepasst zu einer Längsführung jeweils eines Antiresonanzelement-Vorformlings (300), wobei die Positionierungsschablone (400,400',400") und das Hüllrohr (200) materialeinheitlich sind, so dass die Positionierungsschablone (400,400',400") und das Hüllrohr (200) im Wesentlichen denselben chemischen Stoff aufweisen und die Gesamtmasse der unterschiedlichen chemischen Elemente in der Positionierungsschablone (400,400',400") und dem Hüllrohr (200) weniger als 1 Gew.-% betragen,
d) Anbringen (1300) der Positionierungsschablone (400,400',400") an einem ersten Ende des Hüllrohrs (200),
e) Einführen (1400) von wenigstens Teilen der Antiresonanzelement-Vorformlinge (300) durch die Durchgangsöffnungen zum Anordnen der Antiresonanzelement-Vorformlinge (300) in der Hüllrohr-Innenbohrung,
f) Bearbeiten (1500) einer Anordnung (110,110',110",110‴), umfassend das Hüllrohr (200), die Antiresonanzelement-Vorformlinge (300) und die Positionierungsschablone (400,400',400"), durch einen Heißformprozess ausgewählt aus wenigstens einem von Elongieren und Kollabieren,
**dadurch gekennzeichnet, dass**
die Positionierungsschablone (400,400',400") mindestens eine Zentrierfläche aufweist, die mit dem ersten Ende des Hüllrohrs (200) derart selbstzentrierend zusammenwirkt,
dass die Antiresonanzelement-Vorformlinge (300) im Schritt e) "Einführen" an Soll-Positionen angeordnet werden.

2. Verfahren nach Anspruch 1 **dadurch gekennzeichnet, dass** das Hüllrohr (200) im Bereich des ersten Endes (250) zumindest partiell ausgeschnitten ist, um eine Gegenzentrierfläche (251) zu bilden, die mit der Zentrierfläche formschlüssig zusammenwirkt.

3. Verfahren nach einem der vorhergehenden Ansprüche **dadurch gekennzeichnet, dass** die Antiresonanzelement-Vorformlinge (300) im Schritt f) *"Bearbeiten"* flammenfrei an der Hüllrohr-Wandung (210) thermisch fixiert werden.

4. Verfahren nach einem der vorhergehenden Ansprüche **dadurch gekennzeichnet, dass** das Hüllrohr (200) ein zweites Ende (260) aufweist.

5. Verfahren nach Anspruch 4 **dadurch gekennzeichnet, dass** das Verfahren die Schritte umfasst:
(i) Erstellen einer zweiten Positionierungsschablone (500), aufweisend eine Anzahl die zweite Positionierungsschablone (500) durchdringende zweiten Durchgangsöffnungen (510), angepasst zu einer Längsführung jeweils eines Antiresonanzelement-Vorformlings (300), wobei die zweite Positionierungsschablone (500) und das Hüllrohr (200) materialeinheitlich sind, so dass die zweite Positionierungsschablone (500) und das Hüllrohr (200) im Wesentlichen denselben chemischen Stoff aufweisen und die Gesamtmasse der unterschiedlichen chemischen Elemente in der zweiten Positionierungsschablone (500) und dem Hüllrohr (200) weniger als 1 Gew.-% betragen,
(ii) Kombinieren der zweiten Positionierungsschablone (500) mit dem zweiten Ende des Hüllrohrs (200).

6. Verfahren nach Anspruch 5 **dadurch gekennzeichnet, dass** das Verfahren die Schritte umfasst:
(iii) Einschieben von wenigstens Teilen der Antiresonanzelement-Vorformlinge (300) durch die zweiten Durchgangsöffnungen (510) der zweiten Positionierungsschablone (500),
(iv) wobei die zweite Positionierungsschablone (500) mindestens eine zweite Zentrierfläche (520) aufweist, die mit dem zweiten Ende des Hüllrohrs (200) derart selbstzentrierend zusammenwirkt, dass die Antiresonanzelement-Vorformlinge (300) in dem Schritt (iii) "Einschieben" an Soll-Positionen angeordnet werden.

7. Verfahren nach Anspruch 6 **dadurch gekennzeichnet, dass** das Hüllrohr (200) im Bereich des zweiten Endes (260) zumindest partiell ausgeschnitten ist, um eine zweite Gegenzentrierfläche (261) zu bilden, die mit der zweiten Zentrierfläche formschlüssig zusammenwirkt.

8. Verfahren nach einem der vorhergehenden Ansprüche **dadurch gekennzeichnet, dass** das Verfahren den Schritt umfasst:
A/ Anfertigen einer dritten Positionierungsschablone (600,600'), aufweisend eine Anzahl die dritte Positionierungsschablone (600,600') durchdringende dritten Durchgangsöffnungen (610,610'), angepasst zu einer Längsführung jeweils eines Antiresonanzelement-Vorformlings (300),
wobei die dritte Positionierungsschablone (600,600') mindestens eine dritte Zentrierfläche (620) aufweist.

9. Verfahren nach Anspruch 8 **dadurch gekennzeichnet, dass** das Verfahren den Schritt umfasst:
B/ Fertigen eines rohrartigen Abschlusselementes (700),
wobei das Abschlusselement (700) im Bereich eines ersten Endbereichs (730) eine Wirkfläche (710) ausweist, um mit der dritten Zentrierfläche (620) zusammenzuwirken, insbesondere formschlüssig zusammenzuwirken.

10. Verfahren nach Anspruch 9 **dadurch gekennzeichnet, dass** das Verfahren die Schritte umfasst:
C/ Verknüpfen der dritten Positionierungsschablone (600,600') mit dem ersten Endbereich (730),
D/ Anbinden des Abschlusselementes (700) an das zweite Ende des Hüllrohrs (200),
E/ Durchschieben von wenigstens Teilen der Antiresonanzelement-Vorformlinge (300) durch die dritten Durchgangsöffnungen (610,610') zum Anordnen der Antiresonanzelement-Vorformlinge (300) in der Hüllrohr-Innenbohrung (220), wobei die dritte Zentrierfläche (620) derart selbstzentrierend mit der Wirkfläche (710) zusammenwirkt, dass die Antiresonanzelement-Vorformlinge (300) an Soll-Positionen angeordnet werden.

11. Verfahren nach einem der vorhergehenden Ansprüche **dadurch gekennzeichnet, dass** wenigstens einer der folgenden Schritte ein flammenfreies thermisches Verbinden oder ein flammenbasiertes thermisches Verbinden umfasst:
• Schritt b) "Vorbereiten",
• Schritt d) "Anbringen",
• Schritt (ii) "Kombinieren",
• Schritt C/ "Verknüpfen" und
• Schritt D/ "Anbinden".

12. Verfahren nach einem der vorhergehenden Ansprüche **dadurch gekennzeichnet, dass** die Antiresonanzelement-Vorformlinge (300) vor dem Schritt f) "Bearbeiten" lediglich durch
• die Positionierungsschablone (400,400',400"), oder
• die Positionierungsschablone (400,400',400") und die zweite Positionierungsschablone (500), oder
• die Positionierungsschablone (400,400',400") und die dritte Positionierungsschablone (600,600')
und ansonsten stoffschlussfrei in der Hüllrohr-Innenbohrung gehalten werden.

13. Verfahren nach einem der vorhergehenden Ansprüche **dadurch gekennzeichnet, dass** die Positionierungsschablone (400,400',400") und/oder die zweite Positionierungsschablone (500) und/oder die dritte Positionierungsschablone (600,600') mindestens ein Gasflusselement aufweist, welches die Hüllrohr-Innenbohrung fluidleitend mit der Umgebung der Vorform verbindet.

14. Verfahren zur Herstellung einer sekundären Vorform, aufweisend das Verfahren nach einem der vorhergehenden Ansprüche 1 bis 13, aufweisend den Schritt
• Weiterverarbeitung der Vorform (100,100',100") zu der sekundären Vorform, wobei die Weiterverarbeitung eine einmalige oder wiederholte Durchführung von einem oder mehreren der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

15. Verfahren zur Herstellung einer antiresonanten Hohlkernfaser aus einer Vorform (100, 100', 100"), aufweisend das Verfahren nach einem der vorhergehenden Ansprüche 1 bis 13, aufweisend den Schritt
• Weiterverarbeitung der Vorform (100,100',100") zu der antiresonanten Hohlkernfaser,
wobei die Weiterverarbeitung eine einmalige oder wiederholte Durchführung von einem oder mehreren der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

## Claims

1. A method for producing a preform (100, 100', 100") of an anti-resonant hollow-core fiber, comprising the steps of:
a) providing (1000) a cladding tube (200), which comprises a cladding-tube inner bore and a cladding-tube longitudinal axis, along which a cladding-tube wall extends that is delimited by an inner face and an outer face;
b) preparing (1100) a number of anti-resonance-element preforms (300), each comprising an ARE outer tube and an ARE inner tube inserted therein;
c) preparing (1200) a positioning template (400, 400', 400"), comprising a number of through-openings passing through the positioning template (400, 400', 400"), each through-opening being adapted for longitudinal guidance of an anti-resonance-element preform (300), the positioning template (400, 400', 400") and the cladding tube (200) being made of the same material, so that the positioning template (400, 400', 400") and the cladding tube (200) comprise substantially the same chemical substance and the total mass of the different chemical elements in the positioning template (400, 400', 400") and the cladding tube (200) is less than 1 wt.%;
d) attaching (1300) the positioning template (400, 400', 400") to a first end of the cladding tube (200);
e) introducing (1400) at least parts of the anti-resonance-element preforms (300) through the through-openings in order to arrange the anti-resonance-element preforms (300) in the cladding-tube inner bore; and
f) processing (1500) an assembly (110, 110', 110", 110‴) comprising the cladding tube (200), the anti-resonance-element preforms (300) and the positioning template (400, 400', 400") by means of a hot-forming process selected from at least one of elongation and collapse,
**characterized in that**
the positioning template (400, 400', 400") comprises at least one centering surface which interacts with the first end of the cladding tube (200) in a self-centering manner such that the anti-resonance-element preforms (300) are arranged at desired positions in step e) "introducing."

2. The method according to claim 1, **characterized in that** the cladding tube (200) is at least partially cut out in the region of the first end (250) in order to form a mating centering surface (251) which interacts interlockingly with the centering surface.

3. The method according to one of the preceding claims, **characterized in that** the anti-resonance-element preforms (300) in step f) *"processing"* are thermally fixed in a flame-free manner to the cladding-tube wall (210).

4. The method according to one of the preceding claims, **characterized in that** the cladding tube (200) comprises a second end (260).

5. The method according to claim 4, **characterized in that** the method comprises the steps of:
(i) creating a second positioning template (500), comprising a number of second through-openings (510) passing through the second positioning template (500), each second through-opening being adapted for longitudinal guidance of an anti-resonance-element preform (300), the second positioning template (500) and the cladding tube (200) being made of the same material, so that the second positioning template (500) and the cladding tube (200) comprise substantially the same chemical substance and the total mass of the different chemical elements in the second positioning template (500) and the cladding tube (200) is less than 1 wt.%; and
(ii) combining the second positioning template (500) with the second end of the cladding tube (200).

6. The method according to claim 5, **characterized in that** the method comprises the steps of:
(iii) sliding at least parts of the anti-resonance-element preforms (300) through the second through-openings (510) of the second positioning template (500); and
(iv) the second positioning template (500) comprising at least one second centering surface (520) which interacts with the second end of the cladding tube (200) in a self-centering manner such that the anti-resonance-element preforms (300) are arranged at desired positions in step (iii) "sliding."

7. The method according to claim 6, **characterized in that** the cladding tube (200) is at least partially cut out in the region of the second end (260) in order to form a second mating centering surface (261) which interacts interlockingly with the second centering surface.

8. The method according to one of the preceding claims, **characterized in that** the method comprises the step of:
A/ making a third positioning template (600, 600') comprising a number of third through-openings (610, 610') passing through the third positioning template (600, 600'), each third through-opening being adapted for longitudinal guidance of an anti-resonance-element preform (300),
the third positioning template (600, 600') comprising at least one third centering surface (620).

9. The method according to claim 8, **characterized in that** the method comprises the step of:
B/ manufacturing a tubular closure element (700),
the closure element (700) comprising an active surface (710) in the region of a first end region (730) in order to interact with the third centering surface (620), in particular interlockingly.

10. The method according to claim 9, **characterized in that** the method comprises the steps of:
C/ linking the third positioning template (600, 600') to the first end region (730);
D/ connecting the closure element (700) to the second end of the cladding tube (200); and
E/ sliding at least parts of the anti-resonance-element preforms (300) through the third through-openings (610, 610') in order to arrange the anti-resonance-element preforms (300) in the cladding-tube inner bore (220),
the third centering surface (620) interacting with the active surface (710) in a self-centering manner such that the anti-resonance-element preforms (300) are arranged at desired positions.

11. The method according to one of the preceding claims, **characterized in that** at least one of the following steps comprises flame-free thermal bonding or flame-based thermal bonding:
• step b) "preparing";
• step d) "attaching";
• step (ii) "combining";
• step C/ "linking"; and
• step D/ "binding."

12. The method according to one of the preceding claims, **characterized in that** the anti-resonance-element preforms (300), before step f) "processing," are held in the cladding-tube inner bore only by
• the positioning template (400, 400', 400"); or
• the positioning template (400, 400', 400") and the second positioning template (500); or
• the positioning template (400, 400', 400") and the third positioning template (600, 600'),
and otherwise without an integral bond.

13. The method according to one of the preceding claims, **characterized in that** the positioning template (400, 400', 400") and/or the second positioning template (500) and/or the third positioning template (600, 600') comprises at least one gas flow element which connects the cladding-tube inner bore to the surrounding area of the preform in a fluid-conducting manner.

14. A method for producing a secondary preform, comprising the method according to one of the preceding claims 1 to 13, comprising the step of
• further processing the preform (100, 100', 100") to form the secondary preform, wherein the further processing comprises carrying out one or more of the following hot-forming processes once or repeatedly:
i.) elongation;
ii.) collapse;
iii.) collapse and simultaneous elongation;
iv.) collapse on of additional casing material;
v.) collapse on of additional casing material and subsequent elongation; and
vi.) collapse on of additional casing material and simultaneous elongation.

15. A method for producing an anti-resonant hollow-core fiber from a preform (100, 100', 100"), comprising the method according to one of the preceding claims 1 to 13, comprising the step of
• further processing the preform (100, 100', 100") to form the anti-resonant hollow-core fiber,
wherein the further processing comprises carrying out one or more of the following hot-forming processes once or repeatedly:
i.) elongation;
ii.) collapse;
iii.) collapse and simultaneous elongation;
iv.) collapse on of additional casing material;
v.) collapse on of additional casing material and subsequent elongation; and
vi.) collapse on of additional casing material and simultaneous elongation.

## Revendications

1. Procédé pour la fabrication d'une préforme (100,100',100") d'une fibre à cœur creux antirésonante, comportant les étapes consistant à :
(a) fournir (1000) un tube de gaine (200) qui présente un trou interne de tube de gaine et un axe longitudinal de tube de gaine le long duquel s'étend une paroi de tube de gaine délimitée par une face interne et une face externe,
b) prétraiter (1100) un certain nombre de préformes d'éléments antirésonance (300), comprenant respectivement un tube externe ARE et un tube interne ARE inséré dans celui-ci,
c) préparer (1200) un gabarit de positionnement (400,400',400"), présentant un certain nombre d'ouvertures de passage traversant le gabarit de positionnement (400,400',400"), conçues pour guider longitudinalement respectivement une préforme d'élément antirésonance (300), dans lequel le gabarit de positionnement (400,400',400") et le tube de gaine (200) sont constitués du même matériau, de sorte que le gabarit de positionnement (400,400',400") et le tube de gaine (200) présentent sensiblement la même substance chimique et que la masse totale des différents éléments chimiques dans le gabarit de positionnement (400,400',400") et le tube de gaine (200) est inférieure à 1 % en poids,
d) fixer (1300) le gabarit de positionnement (400,400',400") à une première extrémité du tube de gaine (200),
e) introduire (1400) au moins des parties des préformes d'éléments antirésonance (300) à travers les ouvertures de passage pour disposer les préformes d'éléments antirésonance (300) dans le trou interne de tube de gaine,
f) traiter (1500) un ensemble (110,110',110",110‴), comprenant le tube de gaine (200), les préformes d'éléments antirésonance (300) et le gabarit de positionnement (400,400',400"), par un processus de moulage à chaud choisi parmi au moins l'un parmi allongement et écrasement,
**caractérisé en ce que**
le gabarit de positionnement (400,400',400") présente au moins une surface de centrage qui coopère de manière autocentrée avec la première extrémité du tube de gaine (200) de telle sorte que les préformes d'éléments antirésonance (300) sont disposées dans des positions de consigne à l'étape e) « introduire ».

2. Procédé selon la revendication 1 **caractérisé en ce que** le tube de gaine (200) est au moins partiellement découpé dans la zone de la première extrémité (250) pour former une contre-surface de centrage (251) qui coopère par complémentarité de forme avec la surface de centrage.

3. Procédé selon l'une des revendications précédentes **caractérisé en ce que** les préformes d'éléments antirésonance (300) sont fixées thermiquement sans flamme sur la paroi de tube de gaine (210) lors de l'étape f) « *traiter* »*.*

4. Procédé selon l'une des revendications précédentes **caractérisé en ce que** le tube de gaine (200) présente une seconde extrémité (260).

5. Procédé selon la revendication 4 **caractérisé en ce que** le procédé comprend les étapes consistant à :
(i) créer un deuxième gabarit de positionnement (500), présentant un certain nombre de deuxièmes ouvertures de passage (510) traversant le deuxième gabarit de positionnement (500), conçues pour guider longitudinalement respectivement une préforme d'élément antirésonance (300), dans lequel le deuxième gabarit de positionnement (500) et le tube de gaine (200) sont constitués du même matériau, de sorte que le deuxième gabarit de positionnement (500) et le tube de gaine (200) présentent sensiblement la même substance chimique et que la masse totale des différents éléments chimiques dans le deuxième gabarit de positionnement (500) et le tube de gaine (200) est inférieure à 1 % en poids,
(ii) combiner le deuxième gabarit de positionnement (500) avec la seconde extrémité du tube de gaine (200).

6. Procédé selon la revendication 5 **caractérisé en ce que** le procédé comprend les étapes consistant à :
(iii) insérer au moins des parties des préformes d'éléments antirésonance (300) à travers les deuxièmes ouvertures de passage (510) du deuxième gabarit de positionnement (500),
(iv) dans lequel le deuxième gabarit de positionnement (500) présente au moins une deuxième surface de centrage (520) qui coopère de manière autocentrée avec la seconde extrémité du tube de gaine (200) de telle sorte que les préformes d'éléments antirésonance (300) sont disposées dans des positions de consigne à l'étape (iii) « insérer ».

7. Procédé selon la revendication 6 **caractérisé en ce que** le tube de gaine (200) est découpé au moins partiellement dans la zone de la seconde extrémité (260) pour former une seconde contre-surface de centrage (261) qui coopère par complémentarité de forme avec la deuxième surface de centrage.

8. Procédé selon l'une des revendications précédentes **caractérisé en ce que** le procédé comprend l'étape consistant à :
A/ fabriquer un troisième gabarit de positionnement (600,600'), présentant un certain nombre de troisièmes ouvertures de passage (610,610') traversant le troisième gabarit de positionnement (600,600'), conçues pour guider longitudinalement respectivement une préforme d'élément antirésonance (300), dans lequel le troisième gabarit de positionnement (600,600') présente au moins une troisième surface de centrage (620).

9. Procédé selon la revendication 8 **caractérisé en ce que** le procédé comprend l'étape consistant à :
B/ fabriquer un élément de fermeture (700) tubulaire,
dans lequel l'élément de fermeture (700) présente, dans la zone d'une première zone d'extrémité (730), une surface active (710) pour coopérer, en particulier pour coopérer par complémentarité de forme, avec la troisième surface de centrage (620).

10. Procédé selon la revendication 9 **caractérisé en ce que** le procédé comprend les étapes consistant à :
C/ lier le troisième gabarit de positionnement (600,600') à la première zone d'extrémité (730),
D/ attacher l'élément de fermeture (700) à la seconde extrémité du tube de gaine (200),
E/ faire coulisser au moins des parties des préformes d'éléments antirésonance (300) à travers les troisièmes ouvertures de passage (610,610') pour disposer les préformes d'éléments antirésonance (300) dans le trou interne de tube de gaine (220), dans lequel la troisième surface de centrage (620) coopère de manière autocentrée avec la surface active (710) de telle sorte que les préformes d'éléments antirésonance (300) sont disposées dans des positions de consigne.

11. Procédé selon l'une des revendications précédentes **caractérisé en ce qu'**au moins l'une des étapes suivantes comprend une liaison thermique sans flamme ou une liaison thermique à base de flamme :
• étape b) « prétraiter »,
• étape d) « fixer »,
• étape (ii) « combiner »,
• étape C/ « lier » et
• étape D/ « attacher ».

12. Procédé selon l'une des revendications précédentes **caractérisé en ce que,** avant l'étape f) « traiter », les préformes d'éléments antirésonance (300) sont seulement maintenues par
• le gabarit de positionnement (400,400',400"), ou
• le gabarit de positionnement (400,400',400") et le deuxième gabarit de positionnement (500), ou
• le gabarit de positionnement (400,400',400") et le troisième gabarit de positionnement (600,600')
et sinon maintenues sans adhérence dans le trou interne de tube de gaine.

13. Procédé selon l'une des revendications précédentes **caractérisé en ce que** le gabarit de positionnement (400,400',400") et/ou le deuxième gabarit de positionnement (500) et/ou le troisième gabarit de positionnement (600,600') présentent au moins un élément d'écoulement de gaz qui relie le trou interne de tube de gaine à l'environnement de la préforme par conduction de fluide.

14. Procédé pour la fabrication d'une préforme secondaire, présentant le procédé selon l'une des revendications 1 à 13 précédentes, présentant l'étape consistant à
• transformer ultérieurement la préforme (100,100',100") en préforme secondaire, dans lequel la transformation ultérieure comprend l'exécution unique ou répétée d'un ou de plusieurs des processus de moulage à chaud suivants :
i.) allongement,
ii.) écrasement,
iii.) écrasement et allongement simultané,
iv.) écrasement de matériau enveloppant supplémentaire,
v.) écrasement de matériau enveloppant supplémentaire et allongement consécutif,
vi.) écrasement de matériau enveloppant supplémentaire et allongement simultané.

15. Procédé pour la fabrication d'une fibre à cœur creux antirésonance à partir d'une préforme (100,100',100"), présentant le procédé selon l'une des revendications 1 à 13 précédentes, présentant l'étape consistant à
• transformer ultérieurement la préforme (100,100',100") en fibre à coeur creux antirésonance,
dans lequel la transformation ultérieure comprend l'exécution unique ou répétée d'un ou de plusieurs des processus de moulage à chaud suivants :
i.) allongement,
ii.) écrasement,
iii.) écrasement et allongement simultané,
iv.) écrasement de matériau enveloppant supplémentaire,
v.) écrasement de matériau enveloppant supplémentaire et allongement consécutif,
vi.) écrasement de matériau enveloppant supplémentaire et allongement simultané.
